# EUROPEAN PATENT APPLICATION

(11) **EP 4 804 705 A1**
(43) Date of publication of application: **09.09.2026**
(21) Application number: 24885338.4
(22) Date of filing: 01.10.2024
(51) Int. Cl.: H04W 74/0808, H04W 16/14, H04W 48/12, H04W 72/0453, H04W 84/12

(54) **ACCESS POINT DEVICE, COMMUNICATION DEVICE, COMMUNICATION METHOD, AND PROGRAM**

(30) Priority: 30.10.2023 JP 2023185794
(71) Applicant: Canon Kabushiki Kaisha, Tokyo 146-8501 (JP)
(72) Inventor: TAKADA, Tomoyuki, Tokyo 146-8501 (JP)
(74) Representative: Canon Europe Limited
(86) International application number: PCT/JP2024/035092
(87) International publication number: WO 2025/094562

(57) **Abstract**

An access point apparatus for executing communication complying with an IEEE 802.11 standard series executes communication with another communication apparatus belonging to a first network constructed by the access point apparatus by using one of a first channel access method using at least a predetermined primary channel in one link and a second channel access method using not the primary channel but a non-primary channel different from the primary channel among a plurality of channels included in the link. The access point apparatus transmits to the other communication apparatus, in a case where a radio frame concerning occupancy of at least one channel including the primary channel is received from another access point apparatus constructing a second network different from the first network, and the at least one channel including the primary channel is occupied in the second network, a notification for instructing that the second channel access method should be used or transmission of a radio frame is prohibited.

## Description

### TECHNICAL FIELD

The present invention relates to a communication technique in a communication apparatus capable of executing communication using a communication link formed by a plurality of channels.

### BACKGROUND ART

In recent years, along with an increase in amount of communicated data, communication techniques such as a wireless LAN (Local Area Network) have been developed. As a major communication standard of the wireless LAN, the IEEE (Institute of Electrical and Electronics Engineers) 802.11 standard series is known. The IEEE 802.11 standard series includes IEEE 802.11a/b/g/n/ac/ax/be standards. To further improve the reliability of communication, the IEEE 802.11bn standard as a successor standard of the IEEE 802.11be standard has been developed. In the IEEE 802.11WG (Working Group) that formulates the IEEE 802.11bn standard, the target, scope, and the like of the standard are to be set in UHR SG and detailed technical contents that should be included in this standard are to be defined in TGbn. Note that UHR SG is an abbreviation for Ultra High Reliability Study Group, and TGbn is an abbreviation for Task Group bn.

As one of candidate techniques included in the IEEE 802.11bn standard, a technique for efficiently using frequency resources in a communication method using a communication link formed by a plurality of channels has been studied. For example, PTL 1 describes a technique of executing communication using another channel in a case where a primary channel used to acquire a transmission right cannot be used.

### CITATION LIST

### PATENT LITERATURE

PTL 1: U.S. Patent No. 11696353

### SUMMARY OF INVENTION

### TECHNICAL PROBLEM

The present invention provides a technique for allowing frequency resources to be used more efficiently in a communication system using a communication link formed by a plurality of channels.

### SOLUTION TO PROBLEM

A communication apparatus according to one aspect of the present invention is an access point apparatus for executing communication complying with an IEEE 802.11 standard series, comprising communication means for executing communication with another communication apparatus belonging to a first network constructed by the access point apparatus by using one of a first channel access method using at least a predetermined primary channel in one link and a second channel access method using not the primary channel but a non-primary channel different from the primary channel among a plurality of channels included in the link, wherein in a case where a radio frame concerning occupancy of at least one channel including the primary channel is received from another access point apparatus constructing a second network different from the first network, and the at least one channel including the primary channel is occupied in the second network, the communication means transmits, to the other communication apparatus, a notification for instructing that the second channel access method should be used or transmission of a radio frame is prohibited.

### ADVANTAGEOUS EFFECTS OF INVENTION

According to the present invention, it is possible to use frequency resources more efficiently in a communication system using a communication link formed by a plurality of channels.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2A is a schematic view showing an example of a timing chart when a communication apparatus transmits data;

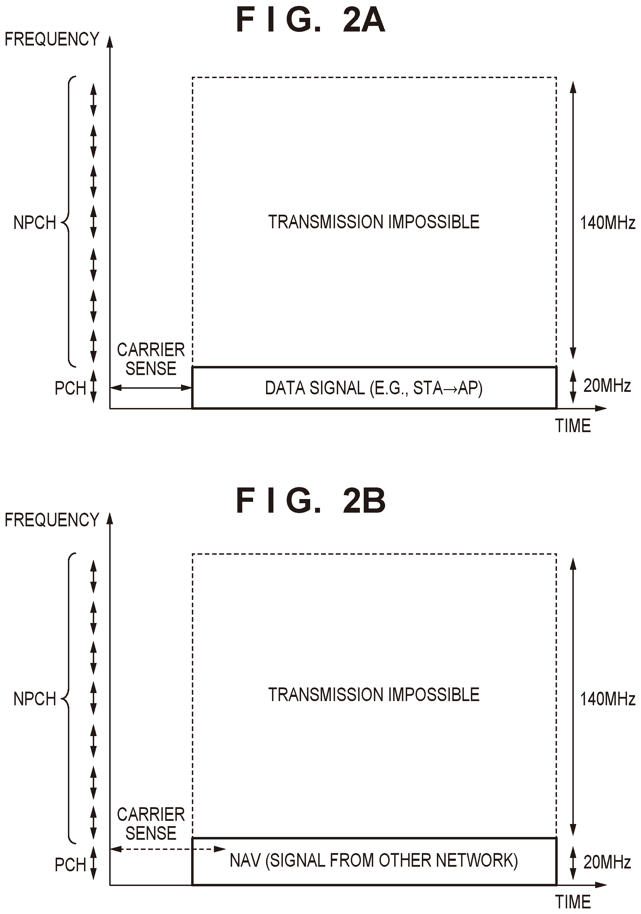

Fig. 2A is a schematic view showing an example of a timing chart when the communication apparatus transmits data;

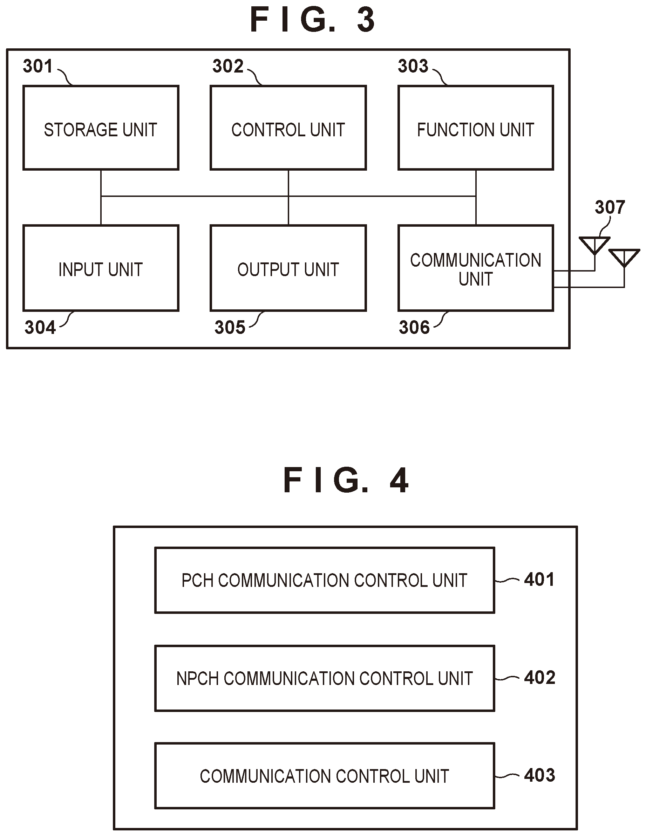

Fig. 3 is a block diagram showing an example of the hardware configuration of the communication apparatus;
Fig. 4 is a block diagram showing an example of the functional configuration of the communication apparatus;

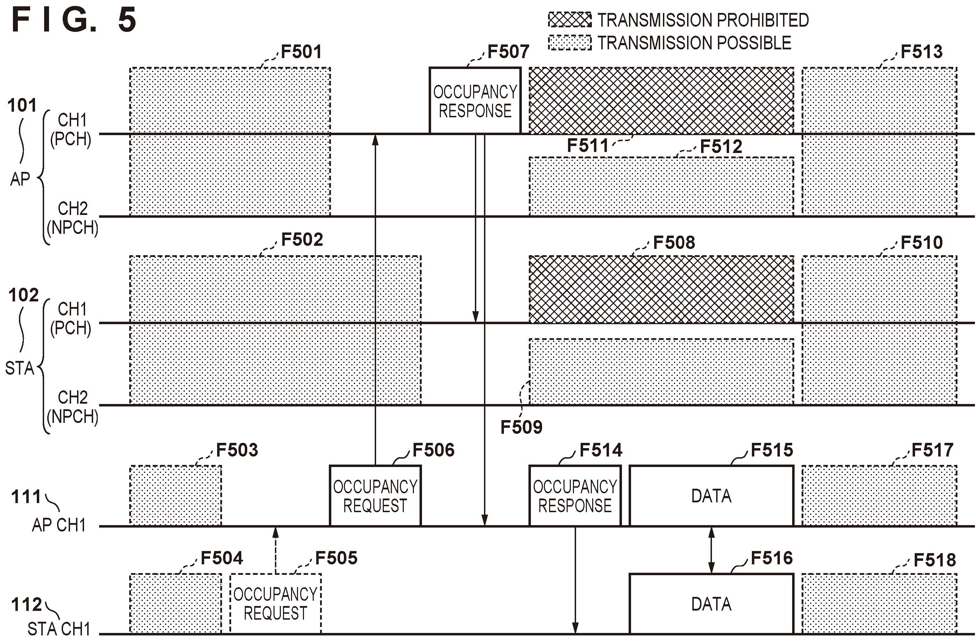

Fig. 5 is a sequence chart showing an example of the procedure of communication in the wireless communication system;

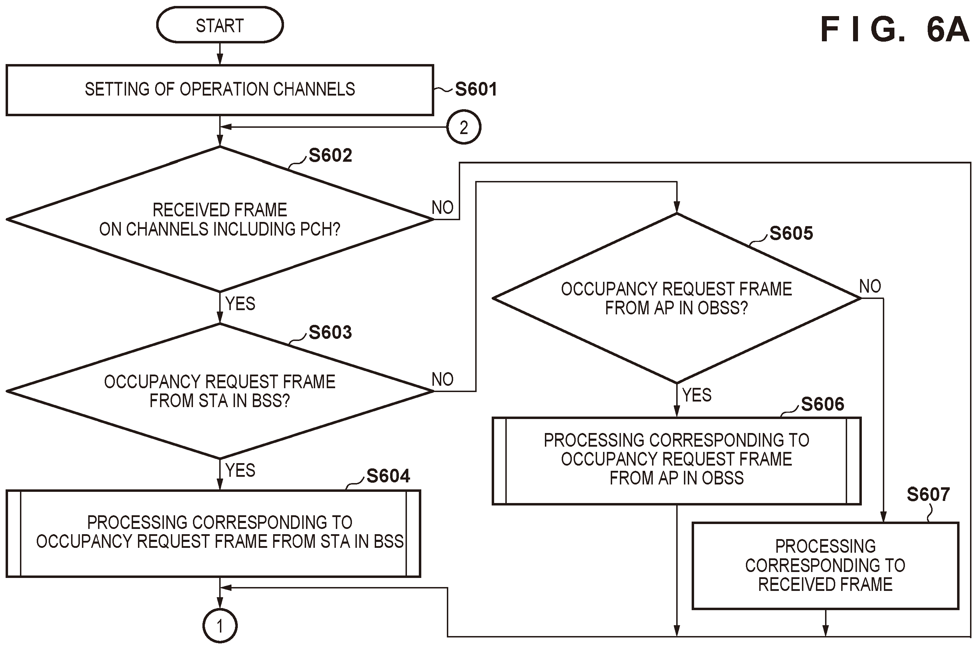

Fig. 6A is a flowchart illustrating an example of the procedure of processing executed by an AP;

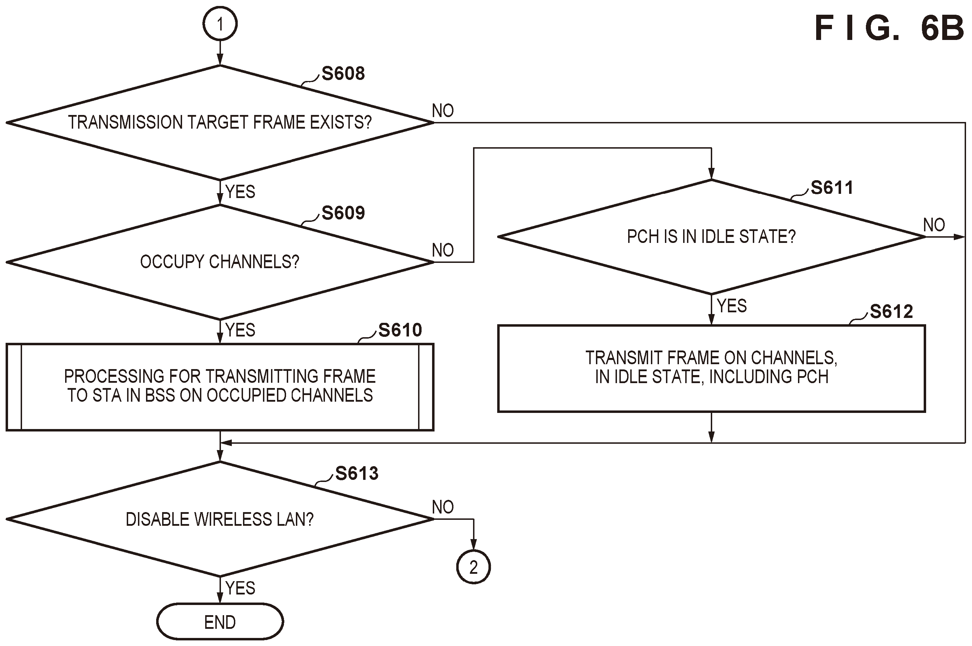

Fig. 6B is a flowchart illustrating the example of the procedure of the processing executed by the AP;

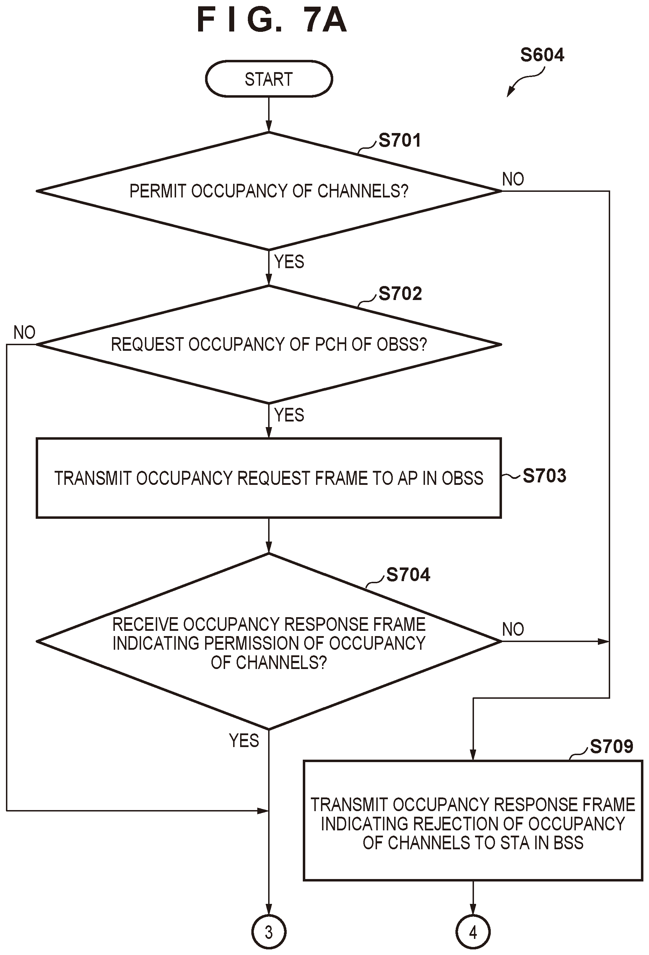

Fig. 7A is a flowchart illustrating the example of the procedure of the processing executed by the AP;

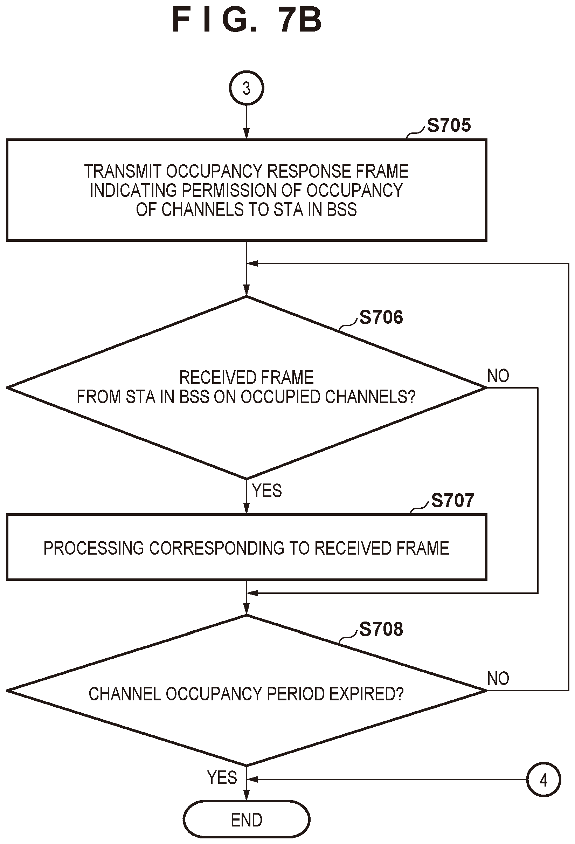

Fig. 7B is a flowchart illustrating the example of the procedure of the processing executed by the AP;

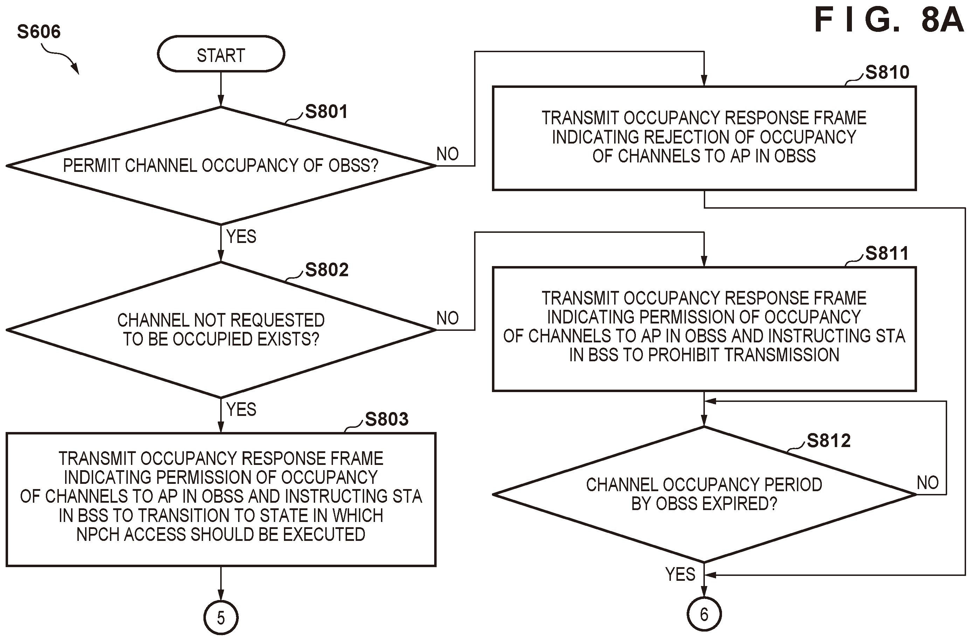

Fig. 8A is a flowchart illustrating the example of the procedure of the processing executed by the AP;

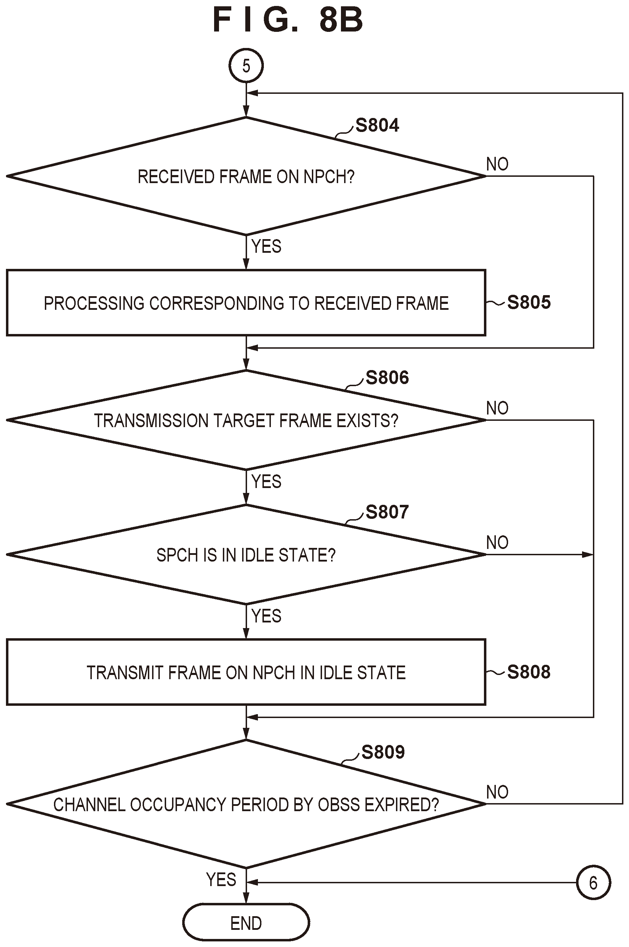

Fig. 8B is a flowchart illustrating the example of the procedure of the processing executed by the AP;

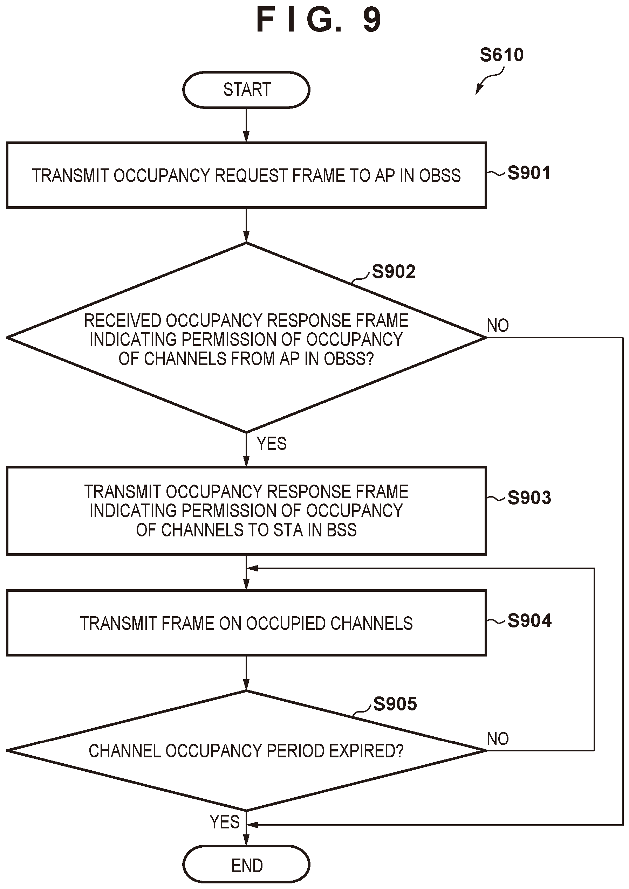

Fig. 9 is a flowchart illustrating the example of the procedure of the processing executed by the AP;

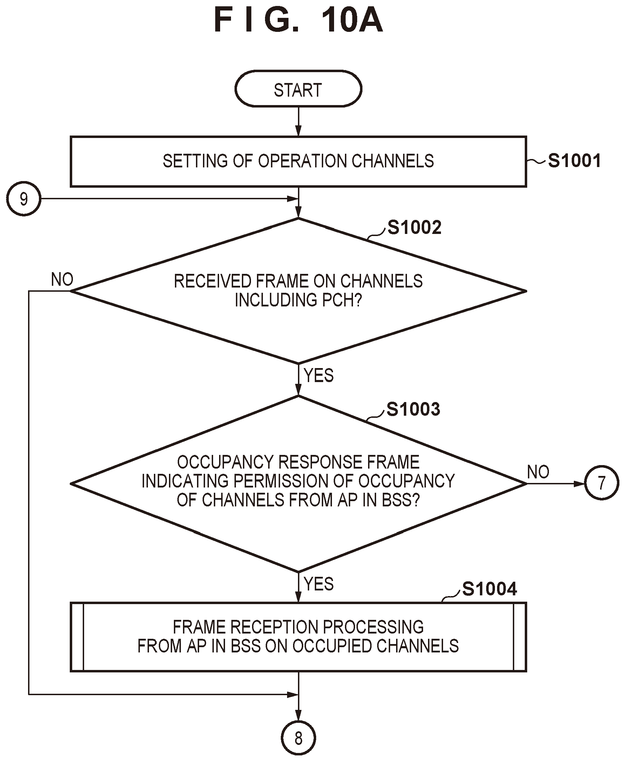

Fig. 10A is a flowchart illustrating an example of the procedure of processing executed by an STA;

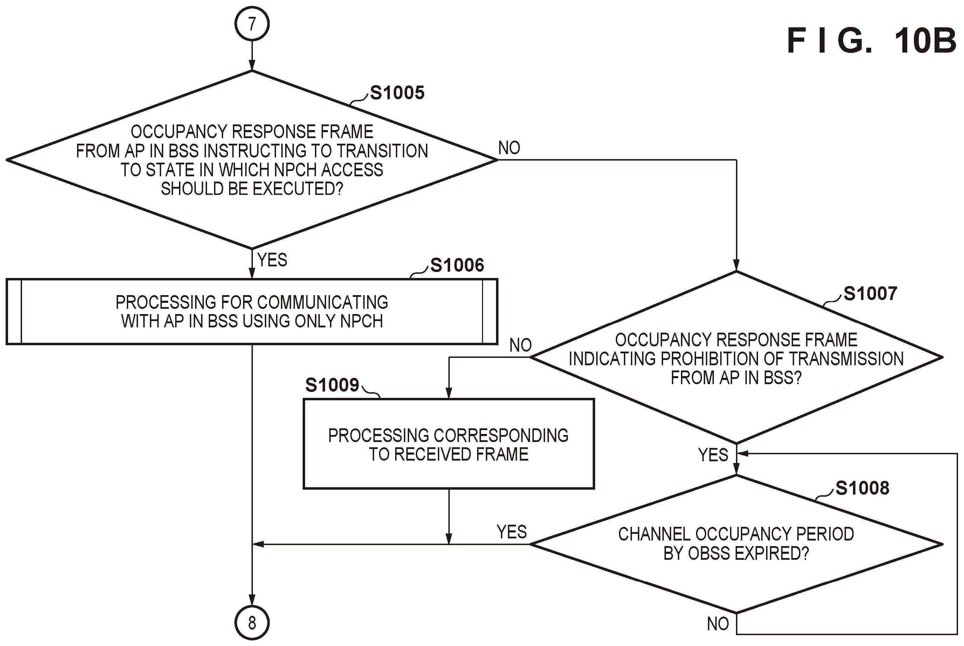

Fig. 10B is a flowchart illustrating the example of the procedure of the processing executed by the STA;

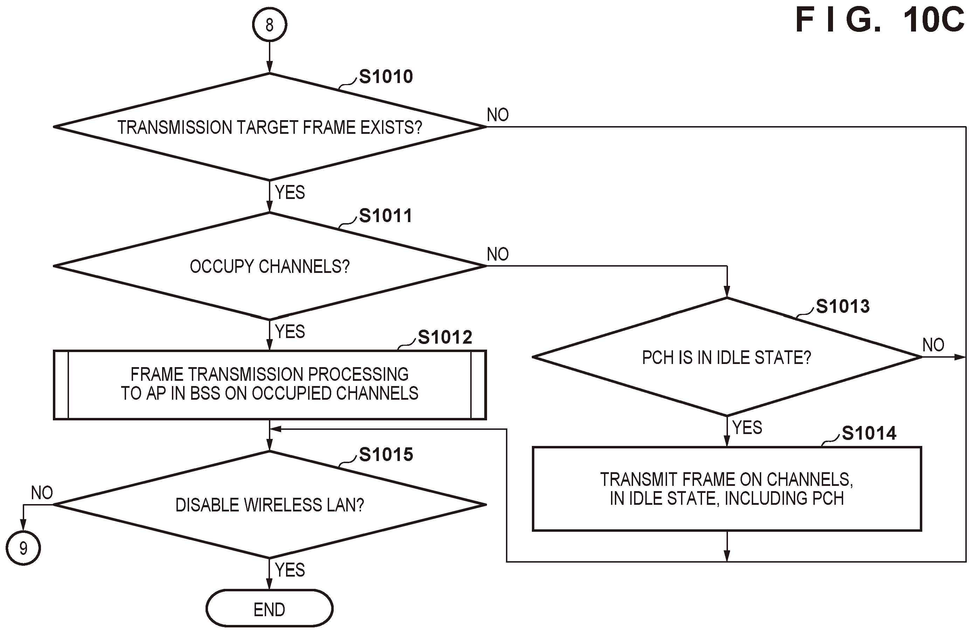

Fig. 10C is a flowchart illustrating the example of the procedure of the processing executed by the STA;

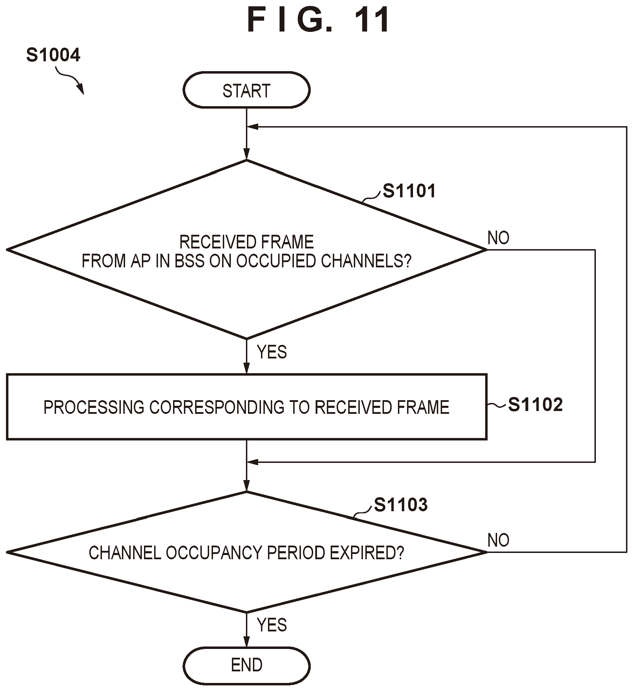

Fig. 11 is a flowchart illustrating the example of the procedure of the processing executed by the STA;

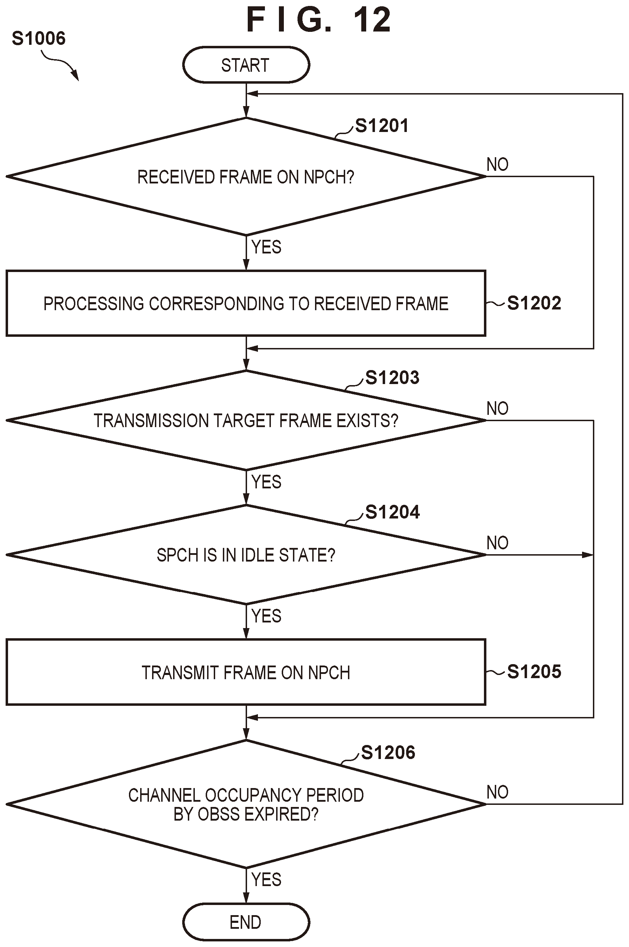

Fig. 12 is a flowchart illustrating the example of the procedure of the processing executed by the STA;

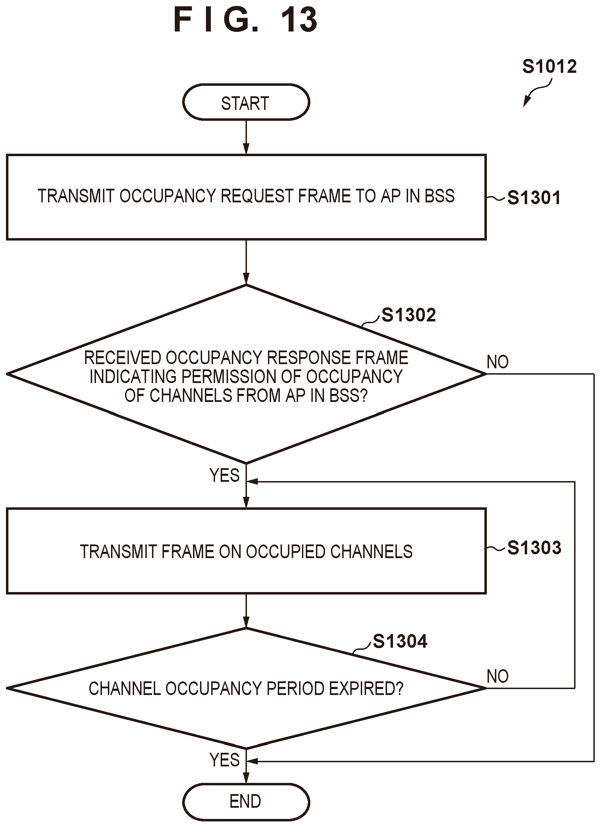

Fig. 13 is a flowchart illustrating the example of the procedure of the processing executed by the STA;

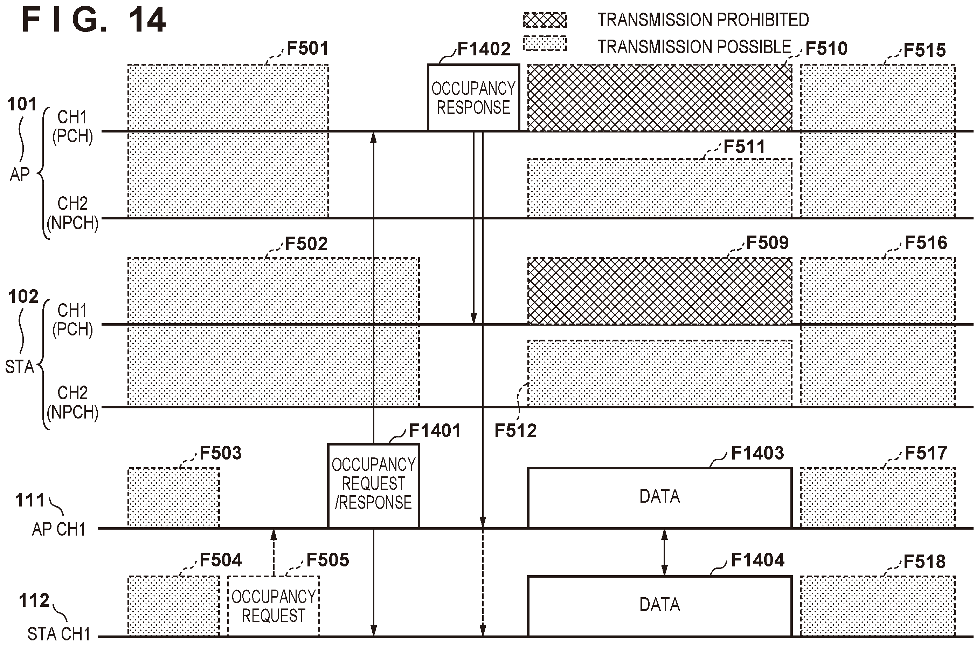

Fig. 14 is a sequence chart showing another example of the procedure of communication in the wireless communication system;

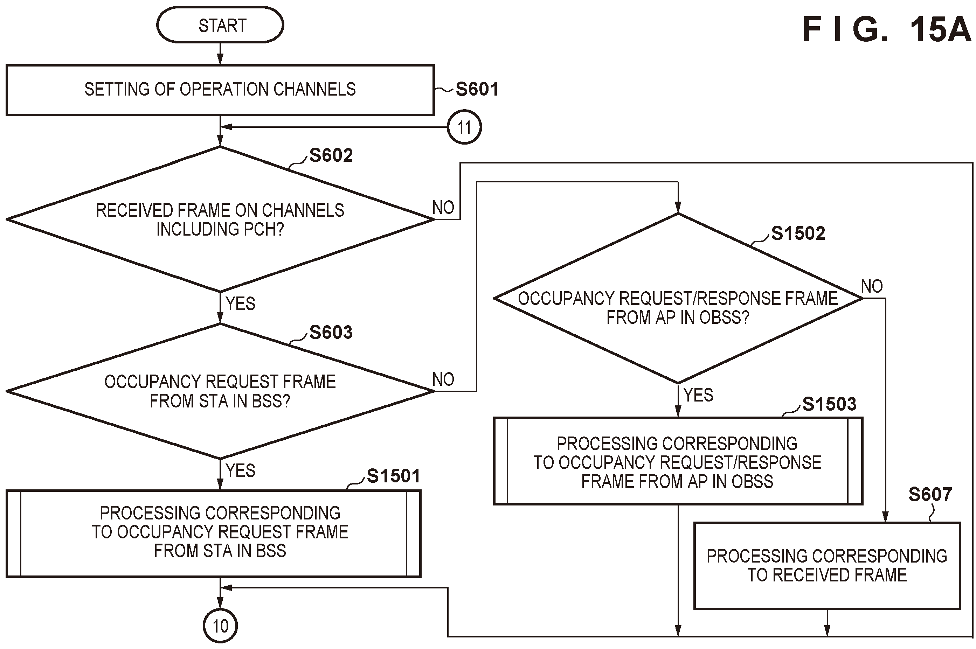

Fig. 15A is a flowchart illustrating a modification of the procedure of the processing executed by the AP;

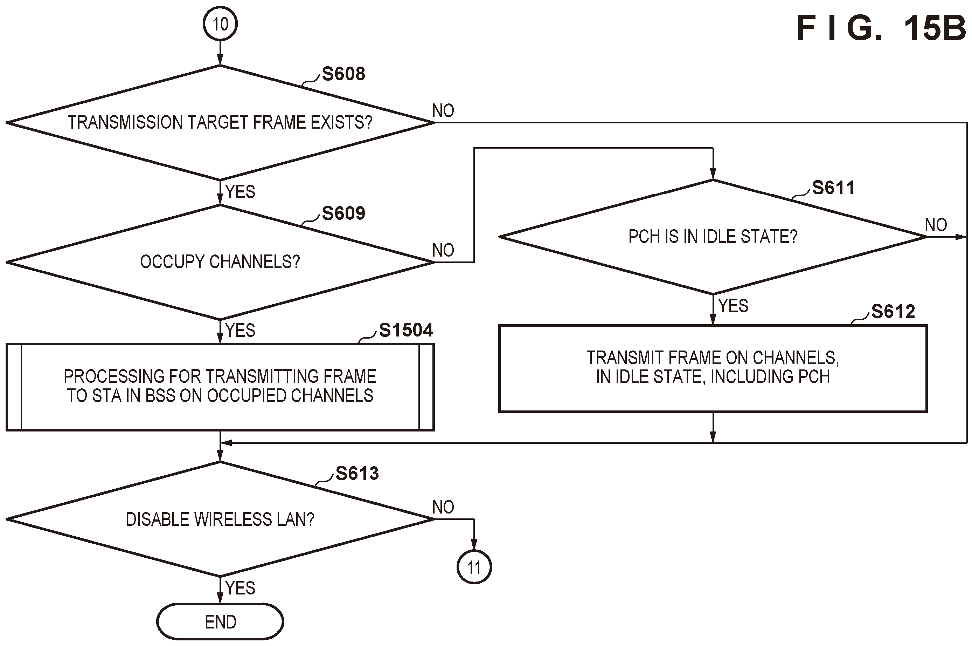

Fig. 15B is a flowchart illustrating the modification of the procedure of the processing executed by the AP;

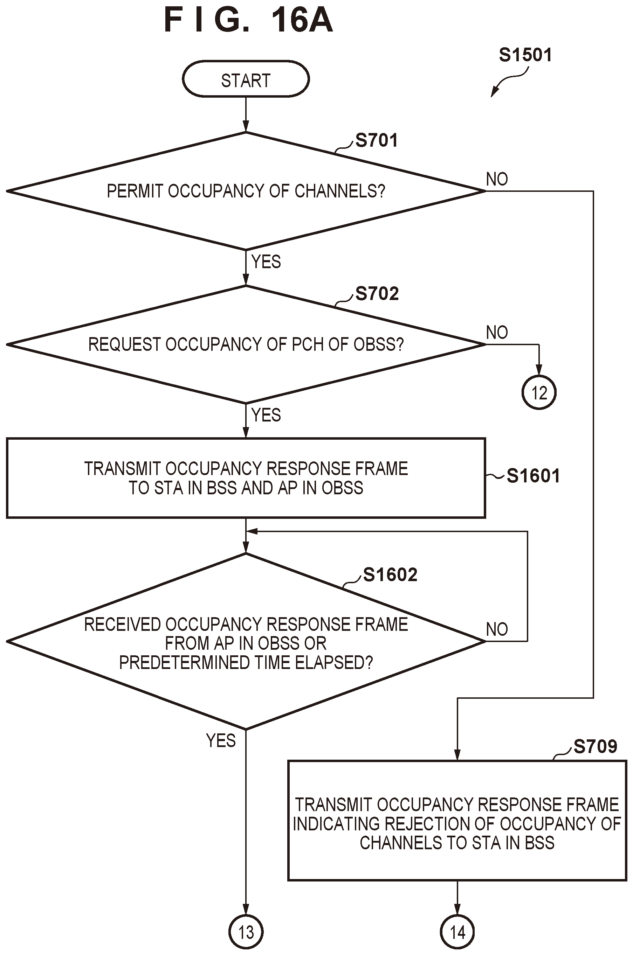

Fig. 16A is a flowchart illustrating the modification of the procedure of the processing executed by the AP;

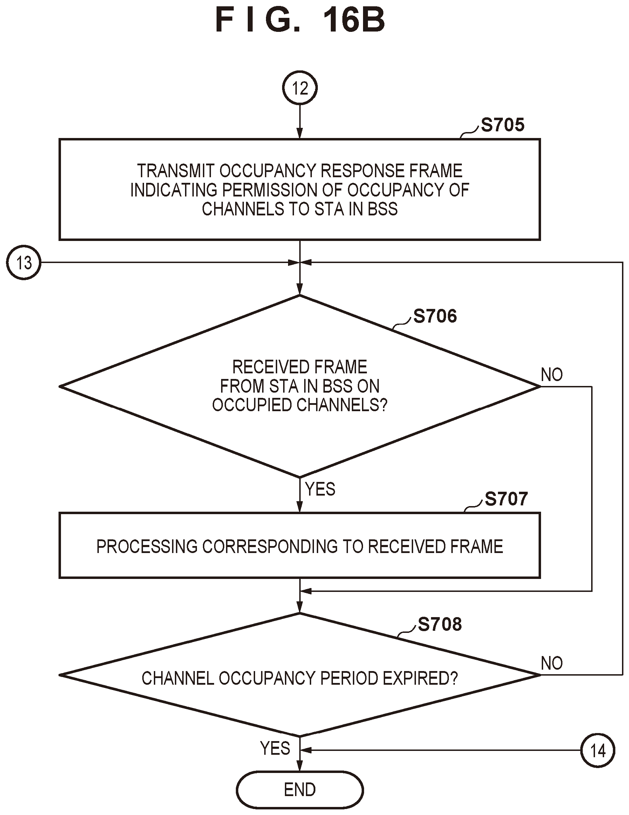

Fig. 16B is a flowchart illustrating the modification of the procedure of the processing executed by the AP;

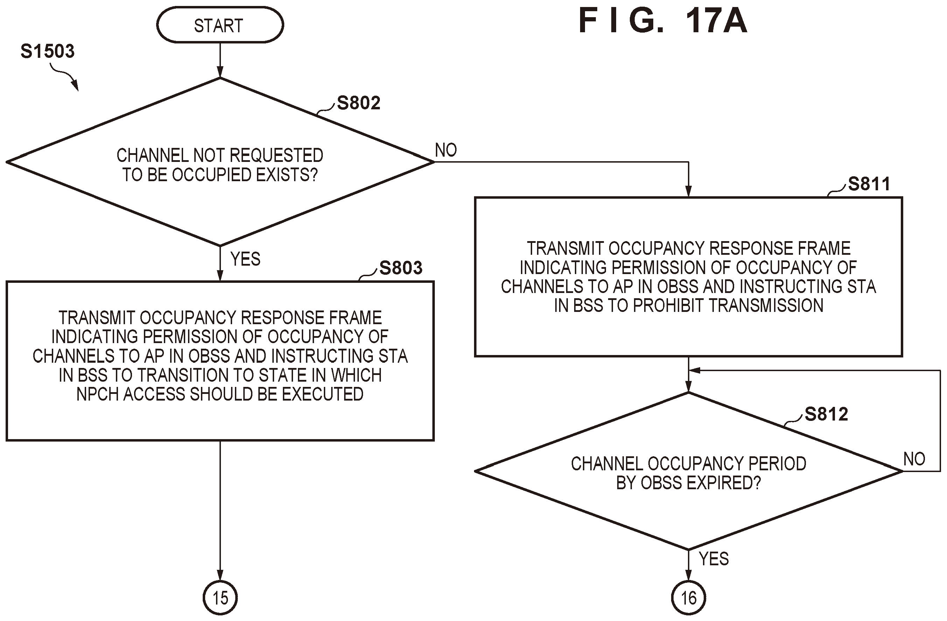

Fig. 17A is a flowchart illustrating the modification of the procedure of the processing executed by the AP;

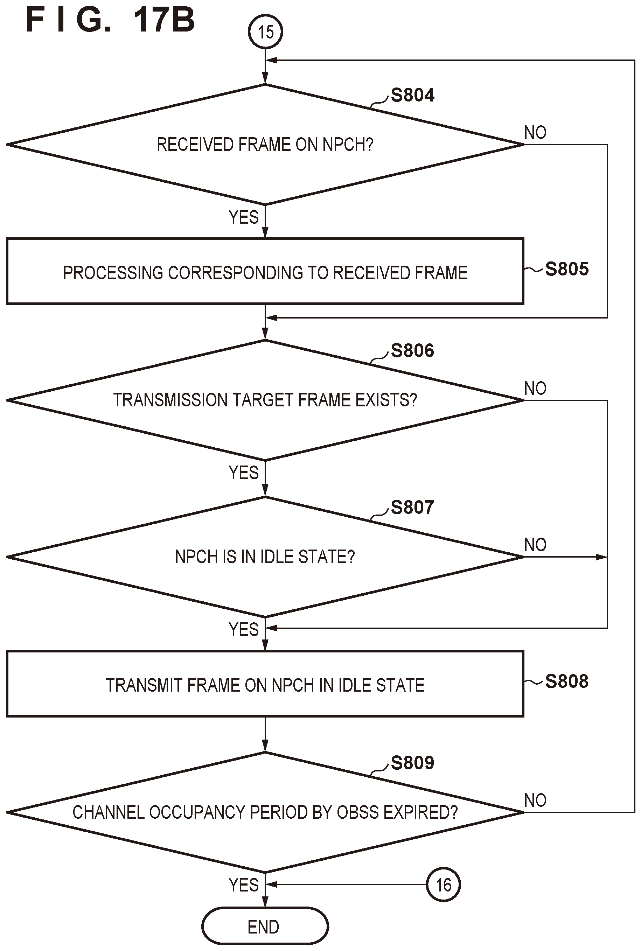

Fig. 17B is a flowchart illustrating the modification of the procedure of the processing executed by the AP;

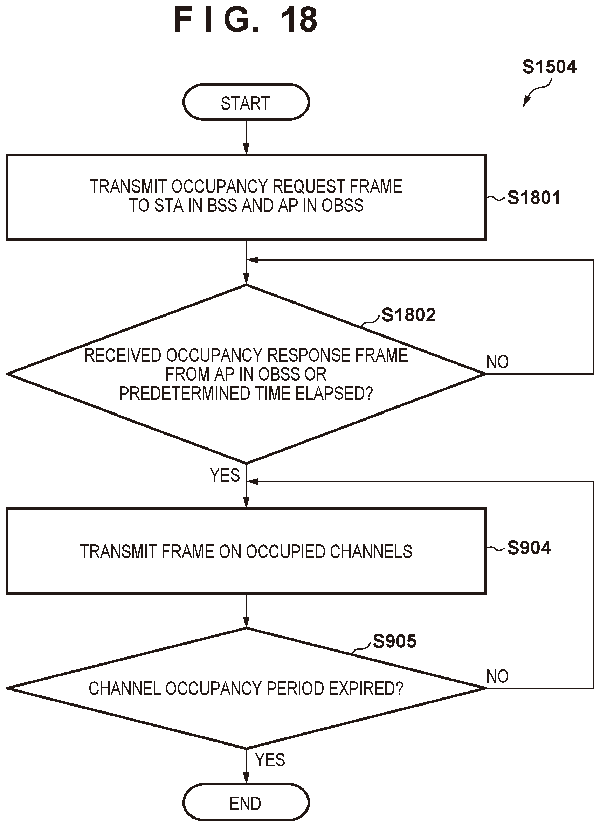

Fig. 18 is a flowchart illustrating the modification of the procedure of the processing executed by the AP;

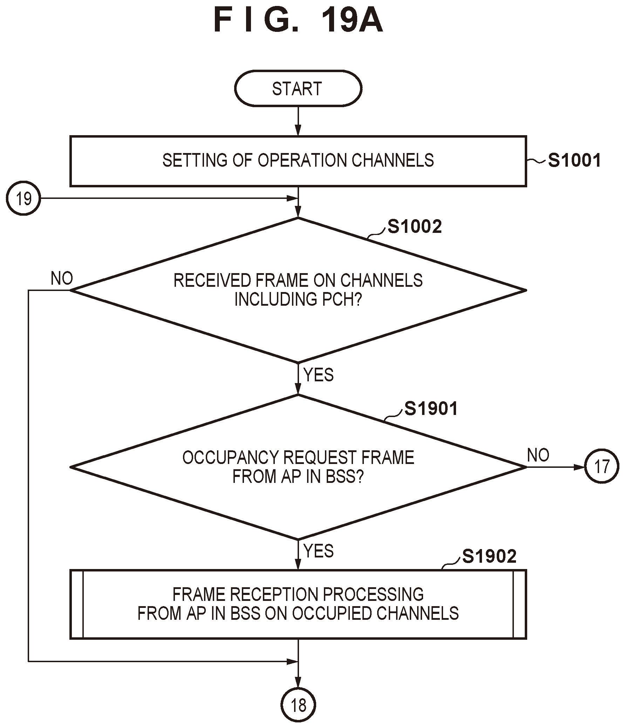

Fig. 19A is a flowchart illustrating a modification of the procedure of the processing executed by the STA;

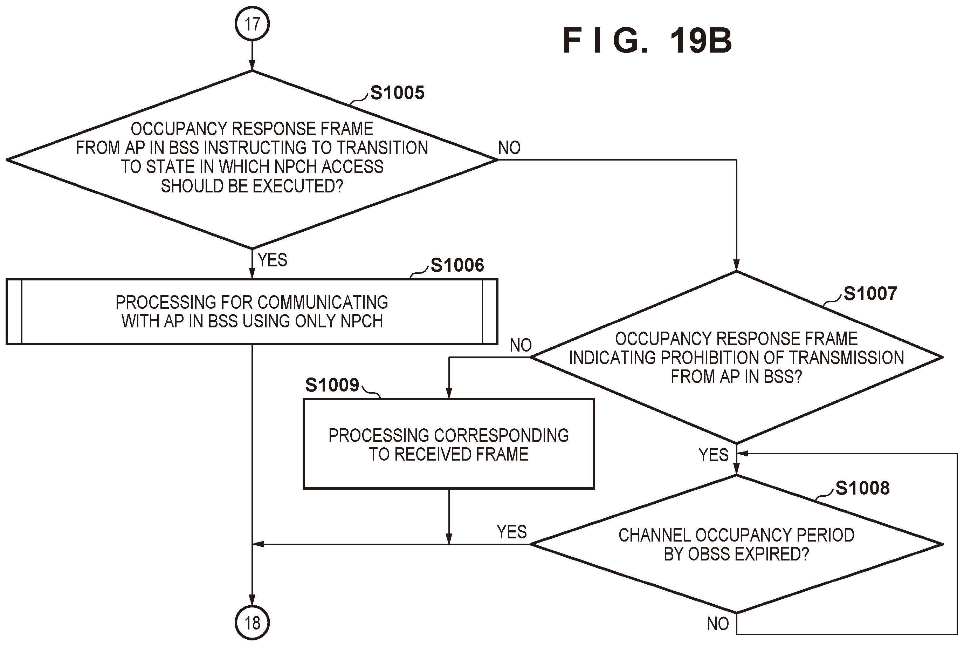

Fig. 19B is a flowchart illustrating the modification of the procedure of the processing executed by the STA;

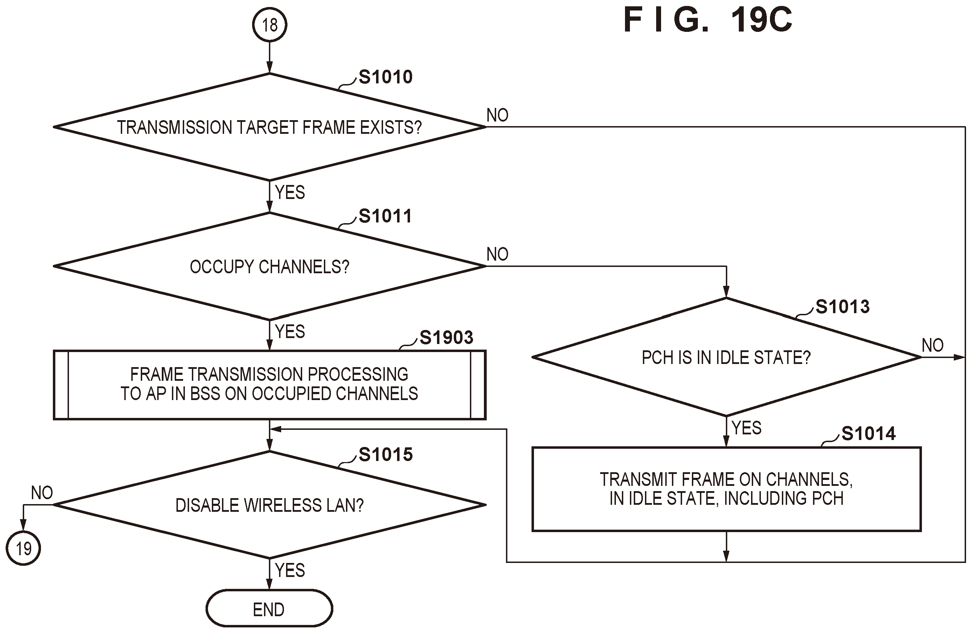

Fig. 19C is a flowchart illustrating the modification of the procedure of the processing executed by the STA;

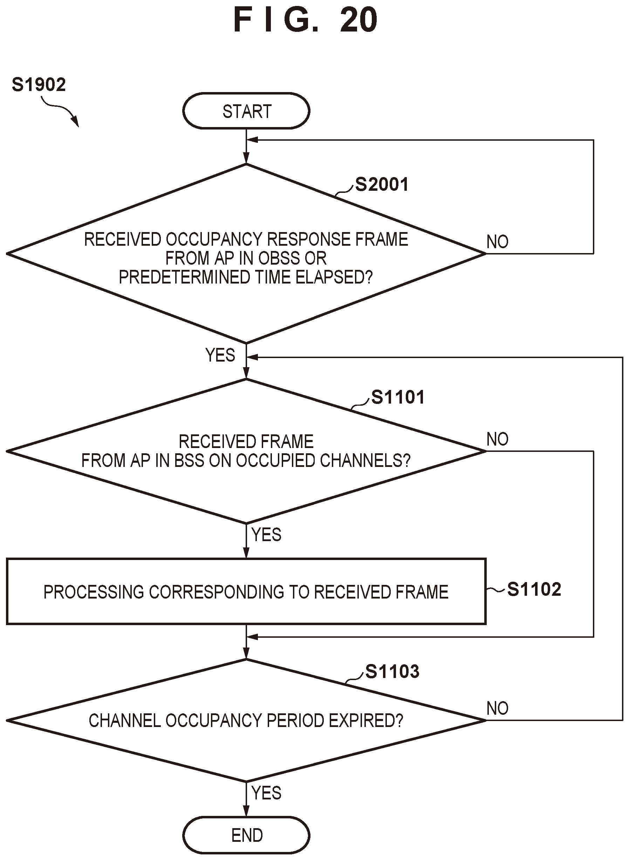

Fig. 20 is a flowchart illustrating the modification of the procedure of the processing executed by the STA; and

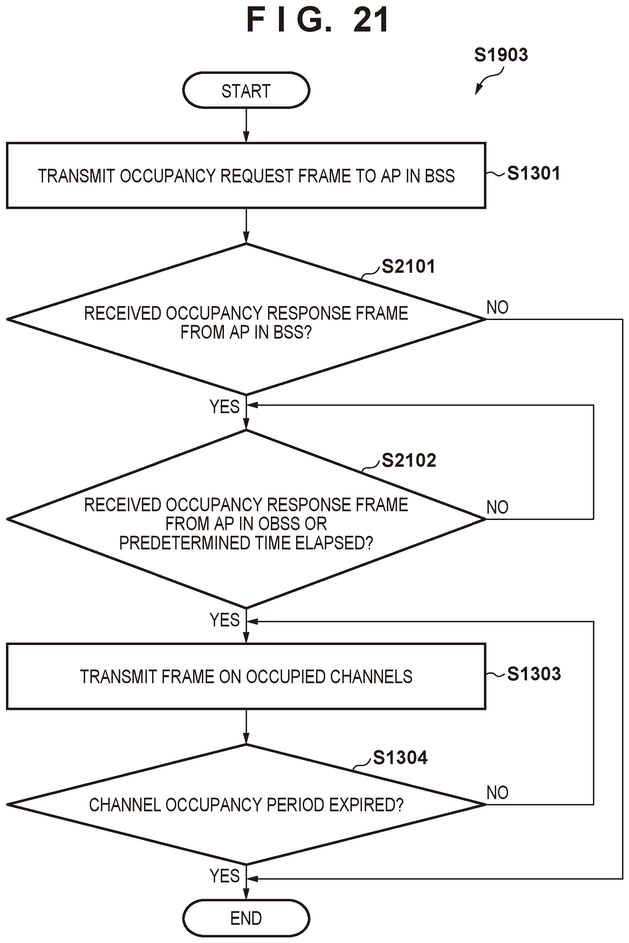

Fig. 21 is a flowchart illustrating the modification of the procedure of the processing executed by the STA.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (System Configuration)

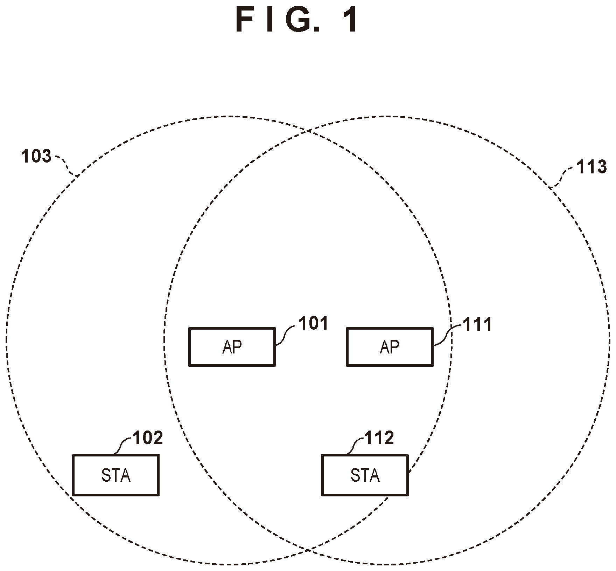

Fig. 1 shows an example of the configuration of a wireless communication system according to this embodiment. The wireless communication system includes, for example, an access point (AP 101) and a station (STA 102). Each of the AP 101 and the STA 102 is a communication apparatus capable of executing wireless communication complying with the IEEE 802.11 standard series. In this embodiment, the AP 101 and the STA 102 will sometimes collectively be referred to as communication apparatuses hereinafter if it is unnecessary to discriminate them. IEEE is an abbreviation for Institute of Electrical and Electronics Engineers. Fig. 1 shows a configuration in which the STA 102 joins a network 103 constructed by the AP 101. The network 103 can also be called a Basic Service Set (BSS). Note that Fig. 1 shows a state in which there exists a network 113 formed by an AP 111 and an STA 112 near the network 103 formed by the AP 101 and the STA 102. Each of the AP 111 and the STA 112 is a communication apparatus capable of executing wireless communication complying with the IEEE 802.11 standard series, similar to the AP 101 and the STA 102. For the AP 101 and the STA 102, the network 103 is a BSS to which the self-apparatuses are connected, and can be called a self-BSS. On the other hand, for the AP 101 and the STA 102, the network 113 is a network that may interfere with the self-BSS, and can be called an Overlapping BSS (OBSS). Note that Fig. 1 shows an example in which one AP and one STA exist in each of the two networks, but a plurality of APs or a plurality of STAs may exist in one network. At this time, the plurality of STAs may be connected to one AP or one STA may be connected to the plurality of APs. Note that the following description focuses on the AP 101 and the STA 102, but the AP 111 and the STA 112 can have the same functions.

In this embodiment, the AP 101 and the STA 102 are configured to execute a communication method complying with the IEEE 802.11bn standard. The IEEE 802.11bn standard is a successor standard of the IEEE 802.11be standard, which aims at 46.08 Gbps (Giga bit per second) as a maximum transmission rate. In the IEEE 802.11bn standard, it is planned to implement, as main features, functions for achieving highly reliable communication, low-latency communication, and improved throughput in a case where communication traffic is congested. A radio frame used in the communication method complying with this standard can be called a UHR (Ultra High Reliability) PPDU. PPDU is an abbreviation for PLCP Protocol Data Unit, and PLCP is an abbreviation for Physical Layer Convergence Protocol. Note that the names such as UHR and IEEE 802.11bn may be changed to other names upon completion of the formulation of the standard. The scope of this specification and the appended claims can be applied to all communication apparatuses that use successor standards as successor standards of the IEEE 802.11be standard. The communication apparatus can support at least one of legacy standards as standards before the IEEE 802.11bn standard. The legacy standards are, for example, the IEEE 802.11a/b/g/n/ac/ax/be standards. The communication apparatus may support other communication standards such as Bluetooth^{®}, NFC, UWB, ZigBee, and MBOA. Note that UWB is an abbreviation for Ultra Wide Band, and MBOA is an abbreviation for Multi Band OFDM Alliance. In addition, NFC is an abbreviation for Near Field Communiation. UWB includes wireless USB, wireless 1394, and WiNET. The communication apparatus may further support communication standards of a wired LAN and the like. The AP 101 is, for example, a wireless LAN router or a personal computer (PC), but is not limited to them. The AP 101 may be an information processing apparatus such as a radio chip that can execute wireless communication complying with the IEEE 802.11bn standard and the like. The STA 102 is, for example, a camera, a tablet, a smartphone, a PC, a mobile phone, a video camera, or a headset, but is not limited to them. The STA 102 may be an information processing apparatus such as a radio chip that can execute wireless communication complying with the IEEE 802.11bn standard and the like.

The communication apparatus can transmit/receive radio signals using frequency bands such as the 2.4-GHz band, 3.6-GHz band, 5-GHz band, 6-GHz band, and the 45-GHz band and 60-GHz band called the millimeter wave bands. The frequency bands used by the communication apparatus are not limited to these, and can include, for example, the Sub-1 GHz band. The communication apparatus can execute communication using bandwidths of 20 MHz, 40 MHz, 80 MHz, 160 MHz, 320 MHz, 540 MHz, 640 MHz, 1080 MHz, and 2160 MHz. The bandwidths used by the communication apparatus are not limited to these, and other bandwidths of, for example, 240 MHz and 4 MHz can be used. Note that in the IEEE 802.11 standard series, a frequency channel using a 20-MHz bandwidth is defined as a basic channel in the frequency band such as the 2.4-GHz band, 5-GHz band, or 6-GHz band. In addition, in this standard, a plurality of usable channels in each of the 2.4-GHz band, 5-GHz band, and 6-GHz band are defined. Note that in this standard, the communication apparatus can use a given channel in combination with another adjacent channel. Using a given channel in combination with another adjacent channel can be called channel bonding. A bundle of channels formed by one or two or more adjacent channels can be called a communication link (link). That is, one link formed by two channels each with a 20-MHz bandwidth can use a 40-MHz bandwidth. In the IEEE 802.11be standard, it is planned to define 320 MHz as a maximum bandwidth usable in one link. Signals transmitted in this bandwidth may be continuous or discontinuous on a frequency axis. Note that the AP 101 and the STA 102 may be an AP MLD (Multi-Link Device) and an STA MLD, respectively, each of which supports a Multi-Link operation for executing communication by simultaneously establishing a plurality of links.

When the communication apparatus transmits a signal using a link established with another communication apparatus, it executes a carrier sense to determine whether transmission is possible. The carrier sense is an operation of determining, by the communication apparatus, the presence/absence of a signal on a channel to be used by itself for transmission. For example, the communication apparatus measures the strength (received signal strength) of a signal received on the channel, and determines, if the received signal strength exceeds a predetermined threshold, that a signal exists (physical carrier sense). The received signal strength can also be called a Received Signal Strength Indicator (RSSI). Furthermore, the communication apparatus can determine the presence/absence of a signal based on information such as a Duration field included in the signal received on the channel (virtual carrier sense). For example, the communication apparatus stores, in itself, as a Network Allocation Vector (NAV), a period indicated by the Duration field included in the received signal. The communication apparatus can handle the stored NAV as a period during which transmission of a radio frame of the self-apparatus is prohibited. In this embodiment, an operation of setting, by the communication apparatus, a period during which the self-apparatus does not perform transmission based on information such as the Duration field of the received signal will be referred to as a NAV setting operation hereinafter. That is, the communication apparatus determines that the signal exists on the channel until the NAV set for the channel expires. As described above, the communication apparatus determines, based on a result of executing the physical carrier sense and the virtual carrier sense, whether the signal exists on the channel. If it is determined that the signal exists on the channel, the communication apparatus can determine that transmission is impossible. The state of the channel in this case can be called a busy state. On the other hand, a state in which no signal is detected on the channel by the carrier sense and no NAV is set can be called an idle state. If the channel is in the idle state, the communication apparatus can determine that transmission is possible.

When, for example, the communication apparatus executes communication using a link with a 160-MHz bandwidth, it can determine whether transmission is possible by using only a first channel with a 20-MHz bandwidth included in the link. The first channel can be called a primary channel (PCH). For example, in the IEEE 802.11 standard series, it is described that if, as a result of executing a carrier sense on the PCH for a predetermined period, it is determined that transmission is possible, the communication apparatus can start transmission. The predetermined period is determined by an InterFrame Space (IFS) determined for each access category for classifying the type of communication traffic and a random number (backoff counter) randomly decided from a predetermined range. That is, if it is determined for the predetermined period that the PCH is in the idle state, the communication apparatus acquires a transmission right to perform transmission using the link. At this time, if a second channel other than the PCH is in the idle state in a PIFS period immediately before the start of transmission, the communication apparatus can perform transmission by channel bonding using the PCH and the channel in the idle state. PIFS is an abbreviation for Priority InterFrame Space. If it is determined, as a result of executing a carrier sense on the PCH, that transmission is impossible, the communication apparatus can postpone transmission even in a case where another channel included in the same link is in the idle state. Note that each second channel other than the PCH forming one link can also be called a secondary channel (SCH) or non-primary channel (NPCH).

In the communication apparatus, if, while a signal is received on a given channel, a signal is transmitted on another channel (for example, an adjacent channel or the like) arranged at a frequency close to the channel, the signal being received may not be received appropriately. For example, assume that the communication apparatus can simultaneously execute transmission processing and reception processing using different channels. If, while a signal is received using a given channel, the communication apparatus transmits a signal using an adjacent channel, the power of the transmission signal may leak into the channel of the reception signal, thereby interfering with the reception signal. In general, since power caused by leakage of the transmission signal is much larger than the reception power of the reception signal, it is assumed that the reception signal cannot be received appropriately. To avoid this situation, the IEEE 802.11 standard series provides a mechanism for preventing another communication apparatus from transmitting a signal to the communication apparatus using a channel adjacent to the PCH while the communication apparatus transmits a signal. That is, it is defined that the PCH is provided as a channel commonly used among the communication apparatuses to determine whether transmission is possible, and while one communication apparatus performs transmission using the PCH, another communication apparatus performs no transmission even if another channel is in the idle state. Thus, while the communication apparatus transmits a signal and the PCH is used, another communication apparatus does not transmit a signal using a channel adjacent to the PCH, thereby preventing a situation in which the communication apparatus receives a signal on the adjacent channel. Therefore, it is possible to solve the problem of interference caused by leakage of power between the channels.

However, when another channel (NPCH) in the idle state is not used based on the state in which the PCH is in the busy state, this may hinder efficient use of the frequency resources of the entire link. Fig. 2A shows an example of a timing chart when the STA 102 transmits data to the AP 101. In Fig. 2A, the STA 102 executes a carrier sense on the PCH to confirm that the PCH is in the idle state, and then transmits data using the PCH with a 20-MHz bandwidth. In this case, for example, even if seven NPCHs other than the PCH are in the idle state, another communication apparatus is not permitted to execute communication using the NPCHs. Fig. 2B shows another example of the timing chart when the STA 102 transmits data to the AP 101. In Fig. 2B, while the STA 102 executes a carrier sense on the PCH, the PCH is used by another network (for example, the network 113 in Fig. 1) existing in the geographical vicinity of the STA 102. In this case, since it is determined in the carrier sense by the STA 102 that the PCH is in the busy state, for example, even if the seven NPCHs other than the PCH are in the idle state, the STA 102 is not permitted to communicate with the AP 101 using the NPCHs. However, since the AP 101 does not perform transmission at this time, even if the STA 102 transmits a signal to the AP 101 using the NPCHs, the AP 101 can appropriately receive the signal transmitted by the STA 102. As described above, if the PCH with a 20-MHz bandwidth is used by another network and thus the remaining NPCHs with a 140-MHz bandwidth in the idle state are not used, the frequency resources cannot efficiently be used.

In this embodiment, in consideration of the above problem, there is provided a function for executing communication between communication apparatuses using the NPCHs included in the same link as that of the PCH without using the PCH while the PCH is used by another communication apparatus. As an example, in a case where the PCH is in the busy state, the communication apparatus sets a Secondary Primary Channel (SPCH) to be used to acquire a transmission right for transmission using the NPCHs. The SPCH includes one or more channels among the NPCHs included in the same link as that of the PCH. If it is determined that the PCH is used by another communication apparatus, the communication apparatus determines whether transmission is possible on the SPCH. That is, based on confirmation that the SPCH is in the idle state by executing the above-described carrier sense on the SPCH, the communication apparatus determines that it is possible to execute communication using the NPCHs. Then, if it is determined that transmission is possible on the SPCH, the communication apparatus performs transmission using the one or more NPCHs including the SPCH. In this embodiment, a communication method of performing transmission using one or more channels including the SPCH without using the PCH will be referred to as NPCH access (Non-Primary Channel Access) hereinafter. Note that this communication method may be referred to as another name hereinafter. For example, this communication method may be referred to as SCA (Secondary Channel Access) hereinafter. In a case where the PCH can be used, the communication apparatus executes communication by a first communication method of executing communication on one communication link using the PCH and the one or more NPCHs. On the other hand, the communication apparatus is configured to execute communication by a second communication method (NPCH access) in a case where a given additional condition (for example, the NPCH is not used) is satisfied under the condition that the PCH cannot be used.

If it is confirmed that the PCH is not in the idle state (the PCH is used by the OBSS), as shown in Fig. 2A, the AP 101 and the STA 102 can execute NPCH access. On the other hand, it is assumed that the STA 102 can exist at a position where it cannot receive, with sufficient power, a signal transmitted from the AP 111 or the STA 112, as shown in, for example, Fig. 1. When the STA 102 exists at such position, even if the PCH is used by the OBSS, the STA 102 cannot detect the use. Therefore, the STA 102 determines that the PCH is not used and attempts to transmit a signal using the PCH while the AP 101 can decide to use NPCH access by detecting a signal from the AP 111 or the STA 112. That is, the results of determining whether to execute NPCH access are assumed to be inconsistent between the AP 101 and the STA 102.

In this embodiment, in consideration of the above problem, for example, the AP 111 transmits, to the communication apparatus in the OBSS (network 103) different from the BSS (network 113) constructed by itself, a radio frame that requests occupancy of the channel set as the PCH in the OBSS. This radio frame requests to occupy, by the network 113 constructed by the AP 111, one or more channels including the channel used as the PCH of the network 103. This radio frame will be referred to as an occupancy request frame hereinafter. Upon receiving the occupancy request frame, the AP 101 determines whether to permit occupancy of the one or more channels including the PCH, and transmits a radio frame including a determination result. This radio frame is a response to the occupancy request frame, and will be referred to as an occupancy response frame hereinafter. The occupancy response frame need not always be received by the AP 111, but is at least transmitted in response to the reception of the occupancy request frame. This occupancy response frame is received by the STA (for example, the STA 102) in the BSS (for example, the network 103) that has received the request to occupy the PCH. Thus, it is shared that NPCH access should be performed when communication is executed in the BSS that has received the request to occupy the PCH within a period during which the channel used as the PCH in the BSS is occupied by the OBSS (the BSS that has transmitted the occupancy request). In an example, assume that the AP 101 exists at a position where it can receive the occupancy request frame from the AP 111 and the STA 102 cannot receive the occupancy request frame. If the AP 101 receives the occupancy request frame, it sends the occupancy response frame to the surroundings. The STA 102 can recognize, with the occupancy response frame, that the PCH is occupied by the OBSS (in this example, the network 113), and recognize that communication should be executed by NPCH access.

The configuration of the communication apparatus that performs such processing and an example of the procedure of the processing will be described in detail below.

### (Apparatus Configuration)

Fig. 3 shows an example of the hardware configuration of the communication apparatus (AP 101, AP 111, STA 102, and STA 112). The communication apparatus includes a storage unit 301, a control unit 302, a function unit 303, an input unit 304, an output unit 305, a communication unit 306, and antennas 307. Note that these are merely examples, the communication apparatus may have a further component not shown in Fig. 3, and some or all of the components shown in Fig. 3 may be replaced by other components having the same functions.

The storage unit 301 includes one or more memories such as a ROM and a RAM. The storage unit 301 stores computer programs for performing various operations to be described later, and various kinds of information such as communication parameters for wireless communication. Note that ROM is an abbreviation for Read Only Memory, and RAM is an abbreviation for Random Access Memory. Note that other than the memories such as a ROM and a RAM, the storage unit 301 may include a storage medium such as a flexible disk, a hard disk, an optical disk, a magnetooptical disk, a CD-ROM, a CD-R, a magnetic tape, a nonvolatile memory card, or a DVD. The storage unit 301 may include a plurality of storage media such as memories.

The control unit 302 includes, for example, one or more processors such as a CPU and an MPU. Note that CPU is an abbreviation for Central Processing Unit and MPU is an abbreviation for Micro Processing Unit. The control unit 302 controls the whole communication apparatus by executing the computer programs stored in the storage unit 301. Note that the control unit 302 may control the whole apparatus by cooperation of the computer programs stored in the storage unit 301 and an operating system. In addition, the control unit 302 generates data and signals (radio frames) to be transmitted in communication with another communication apparatus. In addition, the control unit 302 may include a plurality of processors such as a multi-core processor, and control the whole communication apparatus by the plurality of processors.

In addition, the control unit 302 controls the function unit 303 to execute wireless communication and predetermined processing such as image capturing, printing, or projection. The function unit 303 includes hardware used by the communication apparatus to execute predetermined processing. If the communication apparatus is a printer, the function unit 303 serves as a printing apparatus and, for example, prints image data acquired via the communication unit 306. If the communication apparatus is a scanner, the function unit 303 serves as a reading apparatus, and outputs image data generated by scanning to, for example, the outside via the communication unit 306. If the communication apparatus is a camera, the function unit 303 includes an image sensor and a lens, and outputs image data captured by the camera to, for example, the outside via the communication unit 306.

The input unit 304 includes, for example, a touch panel, hardware keys, and buttons, and accepts various kinds of operations from the user. The output unit 305 includes a display and a loudspeaker, and performs various kinds of outputs to the user. In this example, the output by the output unit 305 can include screen display output on the display and audio output by the loudspeaker. In addition, the output unit 305 may include a vibrator, and may output information by vibration output. Note that both the input unit 304 and the output unit 305 may be implemented by one module, like a touch panel display. Furthermore, each of the input unit 304 and the output unit 305 may be incorporated in the communication apparatus, or may be implemented by an external input/output device. In this case, the communication apparatus includes an input/output interface for connection to the input/output device.

The communication unit 306 executes control for performing wireless communication complying with the IEEE 802.11bn standard. In addition to the IEEE 802.11bn standard, the communication unit 306 can control wireless communication complying with another IEEE 802.11 standard series or control wired communication by a wired LAN or the like. The communication unit 306 controls the antennas 307 to transmit/receive signals for wireless communication generated by the control unit 302. For example, the communication apparatus communicates data such as image data, document data, or video data with the partner apparatus via the communication unit 306. Note that if the communication apparatus supports the NFC standard or Bluetooth standard in addition to the IEEE 802.11bn standard, the communication unit 306 may control wireless communication complying with these communication standards. If the communication apparatus can execute wireless communication complying with a plurality of communication standards, communication units and antennas supporting the respective communication standards can be individually prepared.

The antennas 307 are, for example, antennas configured to detect and emit radio waves in the 2.4-GHz band, the 5-GHz band, and the 6-GHz band. Note that the antennas 307 may be configured to execute communications in the same frequency band. In this case, the antennas 307 can be, for example, a multiband antenna capable of executing communications in a plurality of frequency bands. Fig. 3 shows an example in which the communication apparatus includes two antennas, but one antenna or three or more antennas may be used. Note that if the communication apparatus includes a plurality of antennas, it may include the communication units 306 respectively corresponding to the antennas. Note that the antenna 307 may be prepared separately from the communication unit 306 or may be formed as one module combined with the communication unit 306.

Fig. 4 is a block diagram showing an example of the functional configuration of the communication apparatus (AP 101, AP 111, STA 102, and STA 112). The communication apparatus includes, for example, a PCH communication control unit 401, an NPCH communication control unit 402, and a communication control unit 403. Note that these functions can be implemented when, for example, the control unit 302 executes programs stored in the storage unit 301 of the communication apparatus. This is merely an example, and dedicated hardware for implementing each function may be prepared. Note that the components shown in Fig. 4 are merely examples, and the communication apparatus may include components other than these components. Furthermore, two or more functional blocks shown in Fig. 4 may be implemented as one functional block, or one functional block may be divided into two or more functional blocks.

The PCH communication control unit 401 executes communication by establishing, with the STA, one link using one or more channels including the PCH together. For example, the PCH communication control unit 401 receives a radio frame from the partner apparatus that is connected to the self-apparatus and has acquired a transmission right on the PCH, or transmits a radio frame to the partner apparatus by acquiring a transmission right on the PCH. In a case where the PCH is used by another apparatus and it is impossible to use the PCH, the NPCH communication control unit 402 executes communication using NPCH access. That is, in a case where, for example, the use of the PCH by the OBSS is detected or it is determined, based on the occupancy request frame or occupancy response frame (to be described later), to perform NPCH access, the NPCH communication control unit 402 executes communication using NPCH access. For example, the NPCH communication control unit 402 confirms that the SPCH is in the idle state, acquires a transmission right on the NPCHs, and transmits a radio frame using the one or more NPCHs including the SPCH without using the PCH. Furthermore, the NPCH communication control unit 402 receives a radio frame transmitted by NPCH access from the partner apparatus connected to the self-apparatus. For example, the communication control unit 403 controls which of the PCH communication control unit 401 and the NPCH communication control unit 402 is used to execute communication. For example, the communication control unit 403 determines, based on the occupancy request frame or occupancy response frame, whether the PCH is occupied by the OBSS, and controls, if the PCH is not occupied, to execute communication using the PCH communication control unit 401. Furthermore, for example, during a period in which the PCH is occupied by the OBSS, the communication control unit 403 controls to execute communication using the NPCH communication control unit 402.

### (Procedure of Communication Processing)

Subsequently, an example of the procedure of communication processing executed in the wireless communication system will be described with reference to Fig. 5. Note that Fig. 5 assumes that the AP 101 exists at a position where it can receive a radio frame from the AP 111 and decode it and the STA 102 exists at a position where it cannot receive and decode the radio frame, as shown in Fig. 1. In Fig. 5, assume also that the AP 101 and the STA 102 can use the first channel (CH1) as the PCH, and the AP 111 and the STA 112 can use CH1 as the PCH or the NPCH.

In Fig. 5, assume that all of the AP 101, the STA 102, the AP 111, and the STA 112 do not use CH1 (F501 to F504). Note that since the PCH is not used or occupied by the OBSS, the AP 101 and the STA 102 do not use NPCH access, and acquire an access right on the PCH to transmit a radio frame. Then, if the AP 101 and the STA 102 acquire an access right on the PCH, they can use a second channel (CH2) as the NPCH in a status in which CH2 is not used. Note that Fig. 5 shows a state in which the AP 101 and the STA 102 can use CH2 in addition to CH1 in F501 and F502.

In this state, if, for example, data to be transmitted by occupying the channel is generated in the STA 112, the STA 112 transmits an occupancy request frame (F505). The occupancy request frame includes, for example, information for specifying one or more channels to be occupied and information indicating the length of a period during which the channels are occupied. Note that the information indicating the length of a period during which the channels are occupied may be information for causing the surrounding AP or STA to set a NAV, similar to a conventional Request To Send (RTS) frame or Clear To Send (CTS) frame. The occupancy request frame may also include a Duration field like the RTS frame or CTS frame, and the Duration field may indicate the length of a period during which the channels are occupied. In the following description as well, the information indicating the length of a period during which the channels are occupied in the occupancy request frame may be information for setting a NAV unless otherwise specified, and the length of the period can be indicated by the Duration field in the frame. When the occupancy request frame is transmitted on the channel, a notification of the information for specifying the channel to be occupied may implicitly be made, and the channel to be occupied need not be indicated as explicit information. For example, the occupancy request frame may be transmitted on all the channels requested to be occupied, and in this case, the information indicating the channels requested to be occupied need not be included in the frame. In a case where it is configured to always transmit the occupancy request frame on some of the channels to be occupied, if there are a plurality of channels to be occupied, the channels except for the channels on which the frame is transmitted may be indicated as the channels to be occupied. For example, if occupancy of the PCH of the OBSS is requested, the occupancy request frame may be transmitted on the PCH of the OBSS, and may include information indicating information of the channels requested to be occupied other than the PCH. Alternatively, information indicating a list of channels requested to be occupied including the channel on which the occupancy request frame is transmitted may be included in the frame. In Fig. 5, the STA 112 is assumed to request occupancy of CH1, and transmits the occupancy request frame on CH1, and the occupancy request frame need not include information concerning CH1 as information of channels to be occupied. The channels to be occupied may be indicated by a list of channel numbers or other information of frequency bandwidths or the like.

Upon receiving the occupancy request frame, the AP 111 transmits an occupancy request frame to the communication apparatus (in this example, the AP 101) in the OBSS (in this example, the network 103) seen from the AP 111 (F506). The occupancy request frame can include information indicating the same period and channels to be occupied as those indicated by the occupancy request frame transmitted by the STA 112. Note that this is merely an example, and if there is transmission target data in the AP 111, the period or the channels to be occupied may be increased, and the occupancy request frames in F505 and F506 may include pieces of information of different periods and channels to be occupied. Furthermore, if there is data to be transmitted by occupying a channel, the AP 111 may spontaneously transmit an occupancy request frame without receiving the occupancy request frame from the STA 112. In this case, the occupancy request frame includes information of specifying one or more channels to be occupied and information indicating the length of a period during which the channels are occupied, which have been decided in accordance with the size of the transmission target data and the like. Note that for example, the AP 111 may transmit an occupancy request frame only when requesting occupancy (use) of the PCH in the OBSS (network 103) or transmit an occupancy request frame regardless of the channels requested to be occupied.

Note that while the AP 111 transmits the occupancy request frame, CH1 is in the busy state, and thus the AP 101 cannot use CH1 and CH2. On the other hand, if the AP 101 cannot detect a signal from the STA 112 with sufficient power, the AP 101 can use CH1 (and CH2) while the STA 112 transmits the occupancy request frame. Furthermore, the STA 102 does not detect the radio frames from the AP 111 and the STA 112 with sufficient power, and can use CH1 (and CH2) while the AP 111 and the STA 112 transmit the occupancy request frames.

Upon receiving the occupancy request frame from the AP 111 in the OBSS, the AP 101 determines whether to permit occupancy of CH1 on which the frame has been received or the channels designated in the frame. Then, the AP 101 sends an occupancy response frame including a determination result (F507). The occupancy response frame can be, for example, a frame indicating that the AP 111 is permitted to occupy the channels specified in the occupancy request frame. The occupancy response frame can be a frame that instructs the STA (in this example, the STA 102) belonging to the network 103 constructed by the AP 101 to execute NPCH access. That is, the AP 111 determines, by receiving the occupancy response frame, that occupancy of the channels is permitted, and the STA 102 can interpret the same occupancy response frame as an instruction to use NPCH access. The occupancy response frame can include, for example, information indicating the channels permitted to be occupied and information indicating a period during which occupancy of the channels is permitted. The information indicating the period during which occupancy of the channels is permitted can also be information indicating a period set as a NAV by the surrounding AP or STA, like the conventional RTS frame or CTS frame. Furthermore, the occupancy response frame may include a Duration field like the RTS frame or CTS frame, and the Duration field may indicate the length of a period during which occupancy of the channels is permitted. In the following description as well, the information indicating the length of a period during which the channels are occupied in the occupancy response frame may be information for setting a NAV unless otherwise specified, and the length of the period can be indicated by the Duration field in the frame. This allows the AP 111 to recognize that it is possible to execute communication by occupying the designated channels during the designated period. In addition, the STA 102 can recognize that it should execute NPCH access on the channels that are not occupied during the designated period. Note that the AP 101 may transmit, to the STA 102, a frame indicating that NPCH access should be used, separately from the occupancy response frame to the AP 111. The occupancy response frame may be a multicast frame including a portion storing data for the AP 111 and a portion storing data for the connected STA (in this example, the STA 102). In a case where control is executed by different radio frames, detailed information can individually be provided to the STA 102 and the AP 111 in the OBSS. On the other hand, in a case where control is executed by one radio frame, the number of radio frames for control to be transmitted/received can be reduced, thereby improving communication efficiency.

Note that the information notified from the AP 101 to the STA (in this example, the STA 102) in the BSS can include, for example, information indicating the SPCH. However, if the SPCH is decided in advance between the AP 101 and the STA 102 and the channel is not occupied, the information indicating the SPCH need not be included. In this information, the STA may be instructed to prohibit transmission of a radio frame on any channel. For example, in a case where the channels to be occupied in the OBSS include all channels usable in the BSS 103, prohibition of transmission of a radio frame can be instructed. Information notified from the AP 101 to the STA (in this example, the STA 102) in the BSS can include information indicating the length of a period during which NPCH access should be executed or the length of a period during which transmission of a radio frame is prohibited. By designating the length of the period, it becomes unnecessary to transmit a notification for ending NPCH access or canceling prohibition of transmission of a radio frame, and it is thus possible to prevent communication efficiency from lowering due to an increase in control communication. The designated period length may be equal to, for example, a period length in which occupancy of the channels is requested by the AP in the OBSS in F506 but the present invention is not limited to this. For example, the STA may be notified of a period length obtained by adding, to the designated period length, a predetermined period length such as an SIFS (Short IFS) and a period length in which an occupancy response frame is transmitted from the AP 111 to the STA 112, as will be described later. The period length in which occupancy is permitted, of which the AP in the OBSS is notified, may be equal to or different from the period during which NPCH access should be executed or a period length during which transmission of a radio frame is prohibited, of which the STA in the BSS is notified. For example, in consideration of a propagation delay, a processing time, and the like, periods of different lengths may be set.

Upon receiving the frame from the AP 101, the STA 102 controls to transition to a state in which it performs NPCH access for transmitting a radio frame using the NPCH without transmitting a radio frame on the PCH (F508 and F509). After transitioning to this state, for example, if the SPCH is designated as CH2, the STA 102 can confirm that CH2 is in the idle state and transmit data using one or more NPCHs including CH2. After that, when the period designated in the occupancy response frame in F507 elapses, the STA 102 controls to return to a state in which communication is executed using the PCH (F510). Similarly, after transmission of the occupancy response frame (F507), the AP 101 controls to transition to a state in which it performs NPCH access for transmitting a radio frame using the NPCH without transmitting a radio frame on the PCH (F511 and F512). After the period designated in the occupancy response frame in F507 elapses, the AP 101 controls to return to a state in which communication is executed using the PCH (F513).

On the other hand, if occupancy of CH1 is permitted in the occupancy response frame transmitted from the AP 101 in F507, the AP 111 transmits, to the STA 112, an occupancy response frame indicating that occupancy of CH1 is permitted (F514). This sets a state in which CH1 is occupied in the network 113, the AP 111 and the STA 112 execute data communication using CH1 during a period in which CH1 is occupied (F515 and F516). After that, when the period in which CH1 is occupied elapses, the AP 111 and the STA 112 transition to a state in which CH1 is not occupied. This state is a state in which CH1 is not occupied and it is possible to send a radio frame while CH1 is in the idle state (F517 and F518). Note that as an example, an RTS frame may be used as the occupancy request frame transmitted from the STA 112 to the AP 111 in F505. For example, the STA 112 transmits the RTS frame on all the channels requested to be occupied. Then, the AP 111 may specify the channels on which the RTS frame has been received from the STA 112, and transmit, to the AP 101, the occupancy request frame including, as information indicating the channels requested to be occupied, information indicating the specified channels. Then, when occupancy of the channels is permitted, the AP 111 transmits a CTS frame on each of the channels permitted to be occupied. This allows the STA 112 to adjust the use channels between the BSSs while maintaining the conventional configuration. Note that a list of the channels requested to be occupied is included in the RTS frame, a list of the channels permitted to be occupied is included in the CTS frame, and then these frames may be transmitted/received on one channel.

### (Procedure of Processing Executed by AP)

Subsequently, the operation of the AP (AP 101 and AP 111) will be described with reference to Figs. 6A, 6B, 7A, 7B, 8A, 8B, and 9. For example, this processing may be implemented in a form in which the control unit 302 executes the program stored in the storage unit 301 or implemented as a processing function in the communication unit 306. The AP can start this processing when a wireless LAN function is enabled by turning on the power. First, the AP sets operation channels (PCH and one or more NPCHs) (step S601). This setting may be performed by, for example, user input or automatically performed in accordance with, for example, information about the congestion status of a plurality of channels usable by the AP and the like. After that, in the network constructed by the AP, communication is executed on the set PCH and one or more NPCHs.

The AP stands by for reception of a radio frame on one or more channels including the PCH (step S602). At this time, in a case where NPCH access is not used, when receiving a signal from the STA in the self-BSS, the AP always receives a radio frame using the channels including the PCH. On the other hand, in the OBSS, a channel different from the PCH set in step S601 can be used as the PCH. Therefore, the radio frame received by the AP on the channels including no PCH is a radio frame from the OBSS. At this time, in a case where an occupancy request frame is transmitted, in parallel, on all the channels requested to be occupied and the frame is received on the channels including no PCH, the channels other than the PCH are occupied. That is, in a case where the occupancy request frame is transmitted on all the channels to be occupied, the AP can determine that the radio frame received on the channels including no PCH is not a frame destined for the self-apparatus and the PCH is not occupied. Therefore, if the AP receives the radio frame on the channels including no PCH (NO in step S602), the AP shifts the process to step S608 without performing processing concerning reception. Note that if the occupancy request frame that requests occupancy of the plurality of channels is transmitted on one channel, the AP can decode the frame in consideration of a case where occupancy of the PCH is requested on the channel other than the PCH. Then, if the AP determines that occupancy of the PCH is not requested in the frame, the AP may operate to shift the process to step S608. Note that for example, even if the PCH in the self-BSS (network 113) is CH2, if the PCH in the OBSS (network 103) is CH1 and the AP 111 requests occupancy of CH1, the AP 111 may transmit an occupancy request frame on CH1. That is, the occupancy request frame may be transmitted on the PCH in the network in which an occupancy request is received. In this case, if occupancy of the PCH is requested, the AP 101 always receives the occupancy request frame on the PCH. Therefore, during a period in which NPCH access is not performed, occupancy of the PCH is not requested by the radio frame received on the channels including no PCH, and thus the AP can ignore the radio frame.

If the AP receives the radio frame on the one or more channels including the PCH (YES in step S602), it determines whether the frame is an occupancy request frame from the STA in the self-BSS (step S603). If the AP receives the occupancy request frame from the STA in the self-BSS (YES in step S603), it shifts the process to step S604. Processing in step S604 is, for example, processing when the AP 111 receives the occupancy request frame in F505 of Fig. 5. Details of this processing will be described later. If the received frame is not an occupancy request frame from the STA in the self-BSS (NO in step S603), the AP determines whether the frame is an occupancy request frame from the AP in the OBSS (step S604). If the AP receives the occupancy request frame from the AP in the OBSS (YES in step S604), it shifts the process to step S606. Processing in step S606 is, for example, processing when the AP 101 receives the occupancy request frame from the AP 111 in F506 of Fig. 5. Details of this processing will be described later. If the received frame is not an occupancy request frame from the AP in the OBSS (NO in step S604), the AP executes processing corresponding to the frame (step S607). This processing is processing for a frame concerning conventional communication such as normal data and a control frame, and is not related to this embodiment, and a detailed description thereof will be omitted.

The processing in step S604 will be described with reference to Figs. 7A and 7B. If the AP receives the occupancy request frame from the STA in the self-BSS (YES in step S603), it determines whether to permit occupancy of the channels (step S701). For example, the AP determines whether the channels are to be occupied, based on the congestion status of the self-BSS and characteristics such as throughput and a permissible delay of traffic to be transmitted. If the AP determines not to permit occupancy of the channels (NO in step S701), it transmits, to the STA as the transmission source of the occupancy request frame, an occupancy response frame indicating rejection of occupancy of the channels (step S709), and ends the processing. Note that if the AP determines not to permit occupancy of the channels, it may make no response. In this case, if the STA receives no response within a predetermined period, it can determine that occupancy is not permitted. On the other hand, if the AP determines to permit occupancy of the channels (YES in step S701), it determines whether the channels requested to be occupied include the PCH of the OBSS (step S702). If the channels requested to be occupied include the PCH of the OBSS (YES in step S702), the AP transmits an occupancy request frame to the AP in the OBSS (step S703). For example, the AP may transmit an occupancy request frame on all the channels requested to be occupied or an occupancy request frame only on the PCH of the OBSS. In an example, the AP can specify the PCH of the OBSS by decoding the radio frame (for example, a Beacon frame) from the AP in the OBSS. The AP may acquire information of the PCH of the OBSS by executing in advance (wired or wireless) communication with the AP in the OBSS. Note that if the AP in the OBSS is configured to decode the radio frame on the channel other than the PCH of the OBSS, the AP can transmit an occupancy request frame at least on one of the channels usable in the OBSS.

After transmitting the channel occupancy request, the AP stands by for reception of an occupancy response frame from the AP in the OBSS (step S704). Then, if the AP receives an occupancy response frame indicating rejection of occupancy of the channels or the AP receives no channel occupancy response frame within a predetermined period (NO in step S704), the AP specifies that occupancy of the channels is not permitted. Then, the AP transmits, to the STA as the transmission source of the occupancy request frame received in step S603, an occupancy response frame indicating rejection of occupancy of the channels (step S709), and ends the processing. On the other hand, if the AP receives an occupancy response frame indicating permission of occupancy of the channels (YES in step S704), the AP transmits, to the STA as the transmission source of the occupancy request frame received in step S603, an occupancy response frame indicating permission of occupancy of the channels (step S705). Then, the AP stands by for reception of a frame from the STA using the channels permitted to be occupied (step S706). If the AP receives the frame (YES in step S706), it executes processing corresponding to the frame (step S707). The AP continues the frame reception processing (steps S706 and S707) until the channel occupancy period expires (NO in step S708), and ends the processing when the occupancy period expires (YES in step S708). After the end of the processing shown in Figs. 7A and 7B, the process shifts to step S608 of Fig. 6B.

Subsequently, the processing in step S606 will be described with reference to Figs. 8A and 8B. If the AP receives the occupancy request frame from the AP in the OBSS (YES in step S605), it determines whether to permit occupancy of the channels (step S801). For example, the AP can determine whether the channels are to be occupied, based on the congestion status of the self-BSS and characteristics such as throughput and a permissible delay of traffic to be transmitted. If the AP determines not to permit occupancy of the channels (NO in step S801), it transmits, to the AP in the OBSS as the transmission source of the occupancy request frame, an occupancy response frame indicating rejection of occupancy of the channels (step S810), and ends the processing. In this case, the AP may transmit, to the STA in the self-BSS, a notification indicating that NPCH access should not be used or transmission of a radio frame is not prohibited separately from the occupancy response frame, but need not transmit such notification. That is, if the STA interprets the occupancy response frame as an instruction to use NPCH access or prohibit transmission of a radio frame regardless of the contents of the frame, the AP can transmit such individual notification to the STA. On the other hand, if the STA decides control by confirming the contents of the occupancy response frame, such notification need not be transmitted. Furthermore, when it is determined to use NPCH access or prohibit transmission of a radio frame, if the STA is notified of a determination result separately from the occupancy response frame, the STA may be notified that NPCH access should be used or the like by receiving no such notification.

If the AP determines to permit occupancy of the channels (YES in step S801), it determines whether the channels requested to be occupied include all the channels usable in the self-BSS (step S802). That is, the AP determines whether there is a channel that is not occupied and can continuously be used. If there is a channel not requested to be occupied, the AP transmits, to the STA in the self-BSS, a radio frame that instructs the STA in the self-BSS to transition to a state in which NPCH access should be executed (step S803). Furthermore, the AP transmits, to the AP in the OBSS as the transmission source of the occupancy request frame, an occupancy response frame indicating permission of occupancy of the channels (step S803). Note that information for instructing the STA in the self-BSS to transition to a state in which NPCH access should be executed can be included in the occupancy response frame, but the information may be transmitted in a different radio frame. Note that the information for instructing to transition to a state in which NPCH access should be executed includes information indicating the SPCH selected from the channels not occupied. Furthermore, this information includes information indicating the duration of the state in which NPCH access should be executed. This duration corresponds to the occupancy time of the PCH of the self-BSS by the OBSS, but may be set to a time longer or shorter than the occupancy time.

After that, communication using NPCH access is executed until the channel occupancy period by the OBSS expires (NO in step S809). That is, the AP stands by for a frame on the NPCHs including the SPCH (step S804). Then, if the AP receives a frame on the NPCHs including the SPCH (YES in step S804), it executes processing corresponding to the received frame (step S805), and advances the process to step S806. If the AP does not receive a frame on the NPCHs including the SPCH (NO in step S804), it advances the process to step S806 without performing the processing in step S805. In step S806, the AP determines whether a transmission target frame is generated. Then, if a transmission target frame is generated (YES in step S806), the AP detects that the SPCH is in the idle state (YES in step S807), and then transmits the transmission target frame on the NPCHs including the SPCH (step S808). On the other hand, if there is no transmission target frame (NO in step S806) or the SPCH is not in the idle state (NO in step S807), the processing in step S808 is not performed. Before the channel occupancy period by the OBSS expires (NO in step S809), the process is returned to step S804. Note that Figs. 8A and 8B show an example in which transmission processing is performed after reception processing but the order of them may be reversed. After that, if the channel occupancy period by the OBSS expires (YES in step S809), the processing shown in Figs. 8A and 8B ends.

Referring back to step S802, if there is no channel not requested to be occupied (NO in step S802), the AP transmits, to the AP in the OBSS, an occupancy response frame indicating permission of occupancy of the channels (step S811). Furthermore, the AP transmits information for instructing the STA in the self-BSS to prohibit transmission of a radio frame (step S811). Note that the information for instructing the STA in the self-BSS to prohibit transmission of a radio frame can be included in an occupancy response frame but the information may be transmitted in a different radio frame. After that, the AP stands by without executing communication until the channel occupancy period by the OBSS expires (step S812), and ends the processing when the occupancy period expires (YES in step S812). After the end of the processing shown in Figs. 8A and 8B, the process shifts to step S608 of Fig. 6B.

Referring back to Figs. 6A and 6B, the AP determines whether a transmission target frame is generated (separately from a transmission target frame generated in the processing caused by the radio frame transmitted from the STA in the self-BSS or the AP in the OBSS) (step S608). If there is no such transmission target frame (NO in step S608), the AP returns the process to step S602 as long as the wireless LAN function is not disabled (NO in step S613), and repeats the processing shown in Figs. 6A and 6B. On the other hand, if there is the transmission target frame (YES in step S608), the AP determines whether the channels should be occupied to transmit the frame (step S609). The AP performs this determination processing based on a permissible delay of the transmission target frame and requested throughput. In an example, if the permissible delay is equal to or shorter than a predetermined time or the requested throughput exceeds a predetermined value, the AP determines that it is necessary to occupy the channels. If the AP determines that it is unnecessary to occupy the channels (NO in step S609), the AP confirms that the PCH is in the idle state (YES in step S611), and transmits the transmission target frame using the channels, in the idle state, including the PCH (step S612). On the other hand, if the AP cannot confirm that the PCH is in the idle state (NO in step S611), the AP does not transmit the transmission target frame. Then, the AP returns the process to step S602 as long as the wireless LAN function is not disabled (NO in step S613), and repeats the processing shown in Figs. 6A and 6B. If the AP determines that it is necessary to occupy the channels (YES in step S609), the AP executes processing in step S610.

The processing in step S610 will be described with reference to Fig. 9. This processing corresponds to, for example, processing when the AP 111 determines that a transmission target frame is generated in the self-apparatus and transmits the occupancy request frame in F506 without receiving the occupancy request frame in F505 from the STA 112 in Fig. 5. The AP transmits an occupancy request frame to the AP in the OBSS to occupy the channels (step S901). Note that if occupancy of the PCH of the OBSS is not requested, the AP may occupy the channels using the RTS/CTS mechanism instead of transmitting the occupancy request frame. After transmission of the occupancy request frame, the AP determines whether an occupancy response frame indicating permission of occupancy of the channels is received from the AP in the OBSS (step S902). If the AP receives an occupancy response frame indicating rejection of occupancy of the channels, or the AP receives no occupancy response frame within a predetermined period (NO in step S902), the AP specifies that the channels cannot be occupied, and ends the processing without transmitting a radio frame. On the other hand, if the AP receives an occupancy response frame indicating permission of occupancy of the channels from the AP in the OBSS (YES in step S902), the AP transmits, to the STA in the self-BSS, an occupancy response frame indicating permission of occupancy of the channels (step S903). Note that the occupancy response frame in step S903 need only be information indicating that the channels are occupied to transmit a radio frame by the AP and transmission of a radio frame by the STA is prohibited during the occupancy period, and may be a frame other than the occupancy response frame. After transmission of the occupancy response frame, the AP transmits the transmission target radio frame on the channels permitted to be occupied (step S904) until the channel occupancy period expires (while NO is determined in step S905). After the channel occupancy period expires (YES in step S905), the AP returns the process to step S613 of Fig. 6B.

### (Procedure of Processing Executed by STA)

Subsequently, the operation of the STA (STA 102 and STA 112) will be described with reference to Figs. 10A, 10B, 10C, 11, 12, and 13. For example, this processing may be implemented in a form in which the control unit 302 executes the program stored in the storage unit 301 or implemented as a processing function in the communication unit 306. The STA can start this processing when the wireless LAN function is enabled by turning on the power. First, the STA sets operation channels (PCH and one or more NPCHs) (step S1001). This setting can be decided based on, for example, an AP search result. Alternatively, this setting may be performed by user input. In an example, the STA searches for APs, and which of the APs found by the search is to be connected is selected by a user operation, thereby deciding to use the operation channels set by the AP. The AP may be notified of operation channels designated by user selection accepted in the STA and setting may be performed to use the operation channels in the AP. After that, in the network which the STA joins, the STA executes communication on the set PCH and one or more NPCHs.

The STA stands by for reception of a radio frame on the one or more channels including the PCH (step S1002). If the STA receives no radio frame on the channels including the PCH (NO in step S1002), it advances the process to step S1010. Note that if the STA receives a radio frame from the AP or STA in the OBSS on the channels including the PCH, it may advance the process to step S1010. On the other hand, if the STA receives a radio frame on the channels including the PCH (from the AP in the self-BSS) (YES in step S1002), it switches, in accordance with the type of the frame, processing to be executed. That is, if the STA determines that the received frame is an occupancy response frame indicating permission of occupancy of the channels from the AP in the self-BSS (YES in step S1003), the STA executes processing in step S1004. The processing in step S1004 will be described later. On the other hand, if the STA determines that the received frame is an occupancy response frame from the AP in the self-BSS, that instructs to transition to a state in which NPCH access should be executed (NO in step S1003 and YES in step S1005), the STA executes processing in step S1006. The processing in step S1006 will be described later. If the STA determines that the received frame is an occupancy response frame indicating prohibition of transmission from the AP in the self-BSS (NO in step S1003, NO in step S1005, and YES in step S1007), the STA stands by until the channel occupancy period by the OBSS expires (step S1008). Then, if the channel occupancy period by the OBSS expires (YES in step S1008), the STA shifts the process to step S1010. Alternatively, if the STA determines that the received frame is another frame (NO in step S1003, NO in step S1005, and NO in step S1007), the STA executes processing corresponding to the frame (step S1009), and shifts the process to step S1010. This processing is processing for a frame concerning conventional communication such as normal data and a control frame, and is not related to this embodiment, and a detailed description thereof will be omitted.

The processing in step S1004 will be described with reference to Fig. 11. This processing corresponds to processing when the STA 112 receives the occupancy response frame in F514 while not transmitting the occupancy request frame in F505 in Fig. 5. That is, the processing shown in Fig. 11 is processing when there is a transmission target frame in the AP in the self-BSS and occupancy of the channels is permitted to transmit the frame by the AP. Upon receiving the occupancy response frame indicating permission of occupancy of the channels from the AP in the self-BSS (YES in step S1003), the STA stands by for a frame from the AP in the self-BSS on the occupied channels (step S1101). Upon receiving the frame (YES in step S1101), the STA executes processing corresponding to the received frame (step S1102). The STA repeats the processes in steps S1101 and S1102 until the channel occupancy period expires (step S1103). Note that instead of the AP, the STA may transmit an acknowledgement (ACK), data, and the like during the channel occupancy period. If the channel occupancy period expires (YES in step S1103), the STA ends the processing shown in Fig. 11, and shifts the process to step S1010 of Figs. 10A to 10C.

The processing in step S1006 will be described next with reference to Fig. 12. This processing corresponds to processing when the STA 102 receives the occupancy response frame in F507 in Fig. 5. The STA stands by for a frame on the one or more NPCHs including the SPCH (step S1201). Then, upon receiving the frame (YES in step S1201), the STA executes processing corresponding to the frame (step S1202). Furthermore, the STA determines whether there is a transmission target frame (step S1203). If there is a transmission target frame (YES in step S1203), the STA confirms that the SPCH is in the idle state (YES in step S1204), and transmits the frame on the one or more NPCHs including the SPCH (step S1205). Note that Fig. 12 shows an example in which transmission processing is performed after reception processing but the order of them may be reversed. That is, as long as the reception processing in steps S1201 and S1202 is executed when a frame is received and the transmission processing in steps S1203 to S1205 is executed when there is a transmission target frame, the STA may execute the processes in any order. The STA repeats the above-described reception processing and transmission processing until the channel occupancy period by the OBSS indicated in the occupancy response frame expires (while NO is determined in step S1206). Then, if the channel occupancy period by the OBSS expires (YES in step S1206), the STA ends the processing shown in Fig. 12, and shifts the process to step S1010 of Fig. 10C.

Referring back to Figs. 10A to 10C, in step S1010, the STA determines whether there is a transmission target frame. If there is no such transmission target frame (NO in step S1010), the STA returns the process to step S1002 as long as the wireless LAN function is not disabled (NO in step S1015), and repeats the processing shown in Figs. 10A to 10C. On the other hand, if there is the transmission target frame (YES in step S1010), the STA determines whether the channels should be occupied to transmit the frame (step S1011). The STA performs this determination processing based on a permissible delay of the transmission target frame and requested throughput. For example, if the permissible delay is equal to or shorter than a predetermined time or the requested throughput exceeds a predetermined value, the STA determines that it is necessary to occupy the channels. If the STA determines that it is unnecessary to occupy the channels (NO in step S1011), the STA confirms that the PCH is in the idle state (YES in step S1013), and transmits the transmission target frame using the channels, in the idle state, including the PCH (step S1014). On the other hand, if the STA cannot confirm that the PCH is in the idle state (NO in step S1013), the STA does not transmit the transmission target frame. Then, the STA returns the process to step S1002 as long as the wireless LAN function is not disabled (NO in step S1015), and repeats the processing shown in Figs. 10A to 10C. If the STA determines that it is necessary to occupy the channels (YES in step S1011), the STA executes processing in step S1012.

The processing in step S1012 will be described with reference to Fig. 13. This processing corresponds to, for example, processing when the STA 112 determines that a transmission target frame is generated in the self-apparatus and transmits the occupancy request frame in F505 in Fig. 5. If a transmission target frame that requires occupancy of the channels is generated, the STA transmits an occupancy request frame to the AP in the self-BSS (step S1301). Then, if the STA receives an occupancy response frame indicating permission of occupancy of the channels from the AP in the self-BSS (YES in step S1302), the STA transmits a radio frame using the occupied channels (step S1303). Transmission of the radio frame is performed during the occupancy period indicated in the occupancy response frame (while NO is determined in step S1304). Note that the AP may transmit data and an ACK during this occupancy period. After the occupancy period expires (YES in step S1304), the STA returns the process to step S1015 of Fig. 10C.

As described above, according to this embodiment, frames concerning a channel occupancy request and permission or rejection of the request are transmitted/received between APs individually constructing BSSs, and each AP transfers the contents of the frame to the STA under itself. This allows the AP and the STA belonging to each of the plurality of BSSs to recognize whether the PCH is occupied due to communication by another BSS. As a result, it is possible to share recognition of whether the PCH can be used in each BSS and whether NPCH access should be used, thereby efficiently executing communication. In addition, occupancy of the channels is negotiated between the BSSs, thereby making it possible to appropriately perform adjustment for occupancy of the channels in accordance with the status in each BSS.

Note that the above embodiment has explained an example in which permission or rejection of occupancy of the channels is indicated. However, if occupancy of a plurality of channels is requested, occupancy of some of the channels may be permitted and occupancy of the remaining channels may be rejected. For example, if an occupancy request frame is transmitted on each of a plurality of channels requested to be occupied, occupancy of only some of the channels can be permitted by transmitting an occupancy response frame indicating permission or rejection of occupancy on each of the channels. If an occupancy request frame is transmitted only on some (for example, the PCH of the OBSS) of the channels requested to be occupied, an occupancy response frame including information indicating at least one of a channel permitted to be occupied and a channel rejected to be occupied can be transmitted. Note that the occupancy request frame may indicate information representing the minimum required number of channels (or bandwidth). In this case, if occupancy of the minimum required number of channels (or bandwidth) is not permitted, occupancy of all the channels may be rejected. Note that if occupancy of the channels is rejected, the AP and the STA may operate not to execute communication on the channels, or may execute contention-based channel access on the channels. That is, if occupancy of the channels is rejected, the AP and the STA do not occupy the channels but may execute communication by accessing the channels by conventional Carrier Sense Multiple Access (CSMA).

### (Modification)

The above embodiment has explained an example in which if the AP requests occupancy of channels and occupancy of the channels is permitted by the AP in the OBSS, the AP can occupy the channels, but the present invention is not limited to this. For example, the AP may "declare" occupancy of the channels by an occupancy request frame, and execute communication by occupying the channels regardless of a response from the AP in the OBSS. Fig. 14 shows an example of the procedure of communication in this case. Note that a term "occupancy request frame" will be used in the following description but may be replaced by "occupancy declaration frame". If, for example, the AP 111 receives an occupancy request frame from the STA 112 (F505), it transmits an occupancy response frame (F1401). In addition, the AP 111 transmits an occupancy request frame based on generation of a transmission target frame in the self-apparatus (F1401). The occupancy request frame and the occupancy response frame will sometimes collectively be referred to as "occupancy request/response frame" hereinafter. The occupancy request/response frame is received by not only the AP 101 in the OBSS but also the STA 112 in the self-BSS. Then, the occupancy request/response frame is a frame that declares occupancy of designated channels after a predetermined time elapses since transmission. The predetermined time can correspond to, for example, a time for waiting for transmission/reception, in the OBSS, of a frame for occupying the channels in the BSS. That is, the predetermined time can be a time for waiting for the AP 101 to instruct the STA 102 to use NPCH access or prohibit transmission of a frame. The predetermined time can be, for example, a time obtained by adding a predetermined IFS to the length of a radio frame used by the AP 101 to transmit an instruction to the STA 102. The AP 111 and the STA 112 execute data communication using the channels whose occupancy has been declared after the predetermined time elapses since transmission or reception of the occupancy request/response frame (F1403 and F1404). Note that if the AP 101 receives the occupancy request/response frame, the AP 101 need not send a response, but may transmit an occupancy response frame, similar to the case shown in Fig. 5 (F1402). The occupancy response frame can be transmitted to instruct the STA 102 to use NPCH access or prohibit transmission. Since the AP 101 need only send this instruction, it may transmit this instruction in a format other than "response". On the other hand, if the occupancy response frame is received, the AP 111 and the STA 112 can execute communication by occupying the channels immediately after the reception.

An example of the procedure of the processing of the AP in this case will be described with reference to Figs. 15A, 15B, 16A, 16B, 17A, 17B, and 18. Note that in Figs. 15A, 15B, 16A, 16B, 17A, 17B, and 18, the same reference symbols as those in Figs. 6A, 6B, 7A, 7B, 8A, 8B, and 9 denote the same processes and a detailed description thereof will be omitted. The processing shown in Figs. 15A and 15B is different from that shown in Figs. 6A and 6B in terms of processing (step S1501) when an occupancy request frame is received from the STA in the self-BSS, processing (step S1503) when an occupancy request/response frame is received from the AP in the OBSS, and processing (step S1504) for occupancy of channels. Note that there is a formal difference (step S1502) due to reception of not only the occupancy request frame but also the occupancy response frame from the AP in the OBSS.

Figs. 16A and 16B show the procedure of the processing in step S1501. If the AP receives, from the STA in the self-BSS, the occupancy request frame that requests occupancy of the PCH of the OBSS (YES in step S702), the AP transmits an occupancy response frame to the STA in the self-BSS and the AP in the OBSS (step S1601). This occupancy response frame includes the same information as that of the occupancy request frame described as the frame transmitted by the AP 111 in the above example except that the frame is not a request for occupancy of the channels but a declaration of occupancy of the channels. That is, information indicating the channels to be occupied and information indicating an occupancy period are included in the occupancy response frame. Note that instead of the occupancy response frame, a frame in the format of the occupancy request frame may be transmitted. After that, if the AP receives a response frame from the AP in the OBSS or a predetermined time elapses (YES in step S1602), the AP recognizes that the channels are occupied and performs reception processing of a radio frame from the STA in the self-BSS using the channels. The remaining processes are the same as in Figs. 7A and 7B.

Figs. 17A and 17B show the procedure of the processing in step S1503. In this modification, if the AP receives the occupancy request frame from the AP in the OBSS, the AP never rejects it. Therefore, the processes in steps S801 and S810 in the processing shown in Figs. 8A and 8B are omitted. The remaining processes are the same as in Figs. 8A and 8B.

Fig. 18 shows the procedure of the processing in step S1504. When transmitting data generated in the self-apparatus in a state in which the PCH is usable, the AP transmits the occupancy request frame to not only the AP in the OBSS but also the STA in the self-BSS (step S1801). Note that in step S1801, at the time of transmitting the data generated in the self-apparatus, the AP may transmit an occupancy response frame in a case where, for example, the AP receives the occupancy request frame due to generation of transmission target data in the STA in the self-BSS. Then, when a predetermined time elapses since transmission of the occupancy request frame (YES in step S1802), the AP executes processing of transmitting a radio frame on the channels whose occupancy has been declared. If the AP receives the occupancy response frame from the AP in the OBSS, it can execute transmission processing of a radio frame even before the predetermined time elapses. Note that in this modification, the AP can transmit a radio frame by assuming that the channels are occupied regardless of the contents of the occupancy response frame. The remaining processes are the same as in Fig. 9.

Subsequently, an example of the procedure of the processing of the STA will be described with reference to Figs. 19A, 19B, 19C, 20, and 21. Processing shown in Fig. 19A to 19C is the same as that shown in Figs. 10A to 10C except for processing (step S1902) when the AP transmits a radio frame that requires occupancy of the channels and processing (step S1903) when transmission target data that requires occupancy of the channels is generated in the STA. Note that there is a formal difference (step S1901) due to reception of not the occupancy response frame but the occupancy request frame in a case where there exists transmission target data in the AP in the BSS. Fig. 20 shows an example of the procedure of processing in step S1902. If the STA receives the occupancy request frame for transmitting a radio frame that requires occupancy of the channels in the AP (YES in step S1901), the STA stands by for a predetermined time since the reception of the occupancy request frame (step S2001). After the predetermined time elapses (YES in step S2001), the STA executes reception processing of the radio frame, similar to Fig. 11. Note that if the STA receives the occupancy response frame from the AP in the OBSS, it can execute reception processing of a radio frame, similar to Fig. 11, even before the predetermined time elapses. Fig. 21 shows an example of the procedure of the processing in step S1903. If transmission target data that requires occupancy of the channels is generated, the STA transmits an occupancy request frame to the AP in the self-BSS (step S1301), and stands by for an occupancy response frame (step S2101). If the STA receives no occupancy response frame (NO in step S2101), it determines that the channels cannot be occupied, and ends the processing without transmitting the transmission target frame (the process returns to the processing shown in Figs. 19A to 19C to repeat the series of processes). On the other hand, if the STA receives an occupancy response frame from the AP in the self-BSS (YES in step S2101), it stands by for reception of an occupancy response frame from the AP in the OBSS or the lapse of the predetermined time (step S2102). Then, when the occupancy response frame is received from the AP in the OBSS or the predetermined time elapses (YES in step S2102), the STA executes processing of transmitting a transmission target frame using the channels whose occupancy has been declared by the AP.

As described above, in a case where a frame that declares occupancy is used, for example, it is unnecessary to receive permission from the AP in the OBSS and notify the STA of permission after an occupancy request frame is transmitted from the AP. Thus, it is possible to reduce the time during which the AP and the STA cannot transmit/receive data and to execute communication using frequency resources more efficiently.

Note that the above-described occupancy request frame and occupancy response frame are terms used to describe the properties of the frames, and the names of the frames can be changed as a matter of course. The above embodiments have explained an example in which the roles of the AP and the STA are clearly discriminated but these apparatuses need not always be discriminated. That is, the processing described as that executed by the AP may be executed by the STA, and the processing described as that executed by the STA may be executed by the AP. The above embodiments may arbitrarily be used in combination, and some processes need not be executed without departing from the scope of the present invention.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-185794 filed October 30, 2023, which is hereby incorporated by reference herein.

## Claims

1. An access point apparatus for executing communication complying with an IEEE 802.11 standard series, comprising:
communication means for executing communication with another communication apparatus belonging to a first network constructed by the access point apparatus by using one of a first channel access method using at least a predetermined primary channel in one link and a second channel access method using not the primary channel but a non-primary channel different from the primary channel among a plurality of channels included in the link,
wherein in a case where a radio frame concerning occupancy of at least one channel including the primary channel is received from another access point apparatus constructing a second network different from the first network, and the at least one channel including the primary channel is occupied in the second network, the communication means transmits, to the other communication apparatus, a notification for instructing that the second channel access method should be used or transmission of a radio frame is prohibited.

2. The access point apparatus according to claim 1, wherein
the first channel access method is a primary channel access method of accessing the access point apparatus based on a result of a carrier sense for the primary channel, and
the second channel access method is a non-primary channel access method of accessing the access point apparatus based on a result of a carrier sense for the non-primary channel.

3. The access point apparatus according to claim 1, wherein
the primary channel is a primary channel defined based on one standard of the IEEE 802.11 standard series, and
the non-primary channel is a non-primary channel defined based on at least one standard of the IEE 802.11 standard series.

4. The access point apparatus according to any one of claims 1 to 3, wherein
the radio frame concerning occupancy of the at least one channel including the primary channel is a radio frame that requests occupancy of the at least one channel including the primary channel,
the access point apparatus further comprises determination means for determining, in a case where the radio frame that requests occupancy of the at least one channel including the primary channel is received from the other access point apparatus, whether to permit occupancy of the at least one channel including the primary channel, and
in a case where occupancy of the at least one channel including the primary channel is permitted, the communication means transmits a response indicating permission of the request to the other access point apparatus, and transmits, to the other communication apparatus, a notification for instructing that the second channel access method should be used or transmission of a radio frame is prohibited.

5. The access point apparatus according to claim 4, wherein the notification is included in the response.

6. The access point apparatus according to claim 4 or 5, wherein the response includes information indicating a period during which occupancy of the at least one channel including the primary channel is permitted.

7. The access point apparatus according to any one of claims 4 to 6, wherein in a case where occupancy of the at least one channel including the primary channel is not permitted, the communication means transmits a response indicating rejection of the request to the other access point apparatus and does not transmit the notification to the other communication apparatus.

8. The access point apparatus according to claim 1, wherein the radio frame concerning occupancy of the at least one channel including the primary channel is a radio frame that declares occupancy of the at least one channel including the primary channel, and in a case where the radio frame is transmitted from the other access point apparatus, the at least one channel including the primary channel is occupied in the second network.

9. The access point apparatus according to any one of claims 1 to 8, wherein in a case where all channels usable in communication between the access point apparatus and the other communication apparatus are occupied by the other access point apparatus, the communication means transmits, to the other communication apparatus, the notification for instructing that transmission of a radio frame is prohibited.

10. The access point apparatus according to any one of claims 1 to 9, wherein the notification includes information indicating one of a period during which the second channel access method should be used and a period during which transmission of the radio frame is prohibited.

11. The access point apparatus according to any one of claims 1 to 10, wherein in a case where the other communication apparatus is instructed that the second channel access method should be used, the notification includes information for designating a channel to be used to acquire a transmission right in the second channel access method among the non-primary channels.

12. A communication apparatus for executing communication complying with an IEEE 802.11 standard series, comprising:
communication means for executing communication with a first access point apparatus in a first network by using one of a first channel access method using at least a predetermined primary channel in one link and a second channel access method using not the primary channel but a non-primary channel different from the primary channel among a plurality of channels included in the link,
wherein the communication means uses the second channel access method in a case where information for instructing that the second channel access method should be used is received in a response transmitted by the first access point apparatus in response to a radio frame concerning occupancy of at least one channel including the primary channel transmitted by a second access point apparatus constructing a second network different from the first network, or the communication means transmits no radio frame in a case where information for instructing that transmission of a radio frame is prohibited is received in the response.

13. The communication apparatus according to claim 12, wherein the response includes information indicating one of a period during which the second channel access method should be used and a period during which transmission of the radio frame is prohibited.

14. An access point apparatus for executing communication complying with an IEEE 802.11 standard series, comprising:
communication means for constructing a first network and executing communication with a first other communication apparatus joining the first network,
wherein the communication means transmits, to another access point apparatus constructing a second network in which communication is executed by using one of a first channel access method using a predetermined primary channel in one link and a second channel access method using not the primary channel but a non-primary channel different from the primary channel among a plurality of channels included in the link, a radio frame concerning occupancy of at least one channel including the primary channel,
the communication means executes communication with the first other communication apparatus using the at least one channel including the primary channel based on the transmission of the radio frame, and
the radio frame is a radio frame for causing, in a case where the other access point apparatus receives the radio frame and the at least one channel including the primary channel is occupied in the first network, the other access point apparatus to transmit one of an instruction that the second channel access method should be used and an instruction that transmission of a radio frame is prohibited to a second other communication apparatus joining the second network.

15. The access point apparatus according to claim 14, wherein
the radio frame concerning occupancy of the at least one channel including the primary channel is a radio frame that requests occupancy of the at least one channel including the primary channel, and
in a case where a response indicating permission of occupancy of the at least one channel including the primary channel is received from the other access point apparatus, the communication means executes communication with the first other communication apparatus using the at least one channel including the primary channel.

16. The access point apparatus according to claim 15, wherein the response includes information indicating a period during which occupancy of the at least one channel including the primary channel is permitted.

17. The access point apparatus according to claim 15 or 16, wherein in a case where a response indicating permission of occupancy of the at least one channel including the primary channel is received from the other access point apparatus, the communication means transmits information indicating permission of occupancy of the at least one channel including the primary channel to the first other communication apparatus.

18. The access point apparatus according to any one of claims 15 to 17, wherein in a case where a response indicating non-permission of occupancy of the at least one channel including the primary channel is received from the other access point apparatus, the communication means does not execute communication with the first other communication apparatus using the at least one channel including the primary channel.

19. The access point apparatus according to any one of claims 15 to 17, wherein in a case where a response indicating non-permission of occupancy of the at least one channel including the primary channel is received from the other access point apparatus, the communication means performs contention-based channel access on the at least one channel including the primary channel with the first other communication apparatus.

20. The access point apparatus according to claim 14, wherein
the radio frame concerning occupancy of the at least one channel including the primary channel is a radio frame that declares occupancy of the at least one channel including the primary channel, and
even in a case where no response is received from the other access point apparatus, the communication means communicates with the first other communication apparatus using the at least one channel including the primary channel after a predetermined time elapses.

21. The access point apparatus according to claim 20, wherein the radio frame that declares occupancy of the at least one channel including the primary channel is also transmitted to the first other communication apparatus.

22. The access point apparatus according to claim 20 or 21, wherein the predetermined time is decided based on a predetermined Interframe Space (IFS) and a period during which the other access point apparatus transmits, to the second other communication apparatus, one of an instruction that the second channel access method should be used and an instruction that transmission of a radio frame is prohibited.

23. The access point apparatus according to any one of claims 14 to 22, wherein in a case where a request is received from the other access point apparatus, the communication means transmits the radio frame concerning occupancy of the at least one channel including the primary channel to the first other communication apparatus.

24. A communication apparatus for executing communication complying with an IEEE 802.11 standard series, comprising:
communication means for joining a first network constructed by a first access point apparatus and executing communication with the first access point apparatus,
wherein the communication means
transmits, to the first access point apparatus, a request to occupy at least one channel including a predetermined primary channel in one link, and
executes communication with the first access point apparatus using the at least one channel including the primary channel in a case where the at least one channel including the primary channel is occupied by transmitting a radio frame concerning occupancy of the at least one channel including the primary channel from the first access point apparatus to a second access point apparatus constructing a second network in which communication is executed by using one of a first channel access method using at least the primary channel and a second channel access method using not the primary channel but a non-primary channel different from the primary channel among a plurality of channels included in the link.

25. The communication apparatus according to claim 24, wherein in a case where a notification indicating that the first access point is permitted to occupy the at least one channel including the primary channel is received from the first access point apparatus, the communication means executes communication with the first access point apparatus using the at least one channel including the primary channel.

26. The communication apparatus according to claim 24, wherein
the radio frame concerning occupancy of the at least one channel including the primary channel transmitted from the first access point apparatus to the second access point apparatus is a radio frame that declares occupancy of the at least one channel including the primary channel, and
the communication means communicates with the first access point apparatus using the at least one channel including the primary channel after a predetermined time elapses since transmission of the radio frame.

27. The communication apparatus according to claim 26, wherein the predetermined time is decided based on a predetermined Interframe Space (IFS) and a period during which the second access point apparatus transmits, to another communication apparatus joining the second network, one of an instruction that the second channel access method should be used and an instruction that transmission of a radio frame is prohibited.

28. A communication method executed by an access point apparatus for executing communication complying with an IEEE 802.11 standard series with another communication apparatus belonging to a first network constructed by the access point apparatus by using one of a first channel access method using at least a predetermined primary channel in one link and a second channel access method using not the primary channel but a non-primary channel different from the primary channel among a plurality of channels included in the link, the method comprising:
transmitting, to the other communication apparatus, a notification for instructing that the second channel access method should be used or transmission of a radio frame is prohibited, in a case where a radio frame concerning occupancy of at least one channel including the primary channel is received from another access point apparatus constructing a second network different from the first network, and the at least one channel including the primary channel is occupied in the second network.

29. A communication method executed by a communication apparatus for executing communication complying with an IEEE 802.11 standard series with a first access point apparatus in a first network by using one of a first channel access method using at least a predetermined primary channel in one link and a second channel access method using not the primary channel but a non-primary channel different from the primary channel among a plurality of channels included in the link, the method comprising:
using the second channel access method in a case where information for instructing that the second channel access method should be used is received in a response transmitted by the first access point apparatus in response to a radio frame concerning occupancy of at least one channel including the primary channel transmitted by a second access point apparatus constructing a second network different from the first network, or transmitting no radio frame in a case where information for instructing that transmission of a radio frame is prohibited is received in the response.

30. A communication method executed by an access point apparatus for constructing a first network and executing communication complying with an IEEE 802.11 standard series with a first other communication apparatus joining the first network, the method comprising:
transmitting, to another access point apparatus constructing a second network in which communication is executed by using one of a first channel access method using a predetermined primary channel in one link and a second channel access method using not the primary channel but a non-primary channel different from the primary channel among a plurality of channels included in the link, a radio frame concerning occupancy of at least one channel including the primary channel; and
executing communication with the first other communication apparatus using the at least one channel including the primary channel based on the transmission of the radio frame,
wherein the radio frame is a radio frame for causing, in a case where the other access point apparatus receives the radio frame and the at least one channel including the primary channel is occupied in the first network, the other access point apparatus to transmit one of an instruction that the second channel access method should be used and an instruction that transmission of a radio frame is prohibited to a second other communication apparatus joining the second network.

31. A communication method executed by a communication apparatus for joining a first network constructed by a first access point apparatus and executing communication complying with an IEEE 802.11 standard series with the first access point apparatus, the method comprising:
transmitting, to the first access point apparatus, a request to occupy at least one channel including a predetermined primary channel in one link; and
executing communication with the first access point apparatus using the at least one channel including the primary channel in a case where the at least one channel including the primary channel is occupied by transmitting a radio frame concerning occupancy of the at least one channel including the primary channel from the first access point apparatus to a second access point apparatus constructing a second network in which communication is executed by using one of a first channel access method using at least the primary channel and a second channel access method using not the primary channel but a non-primary channel different from the primary channel among a plurality of channels included in the link.

32. A program for causing a computer to function as each means of an access point apparatus defined in any one of claims 1 to 11 or 14 to 23.

33. A program for causing a computer to function as each means of a communication apparatus defined in any one of claims 12, 13, or 24 to 27.
